# EUROPEAN PATENT SPECIFICATION

(11) **EP 2 541 364 B1**
(45) Date of publication and mention of the grant of the patent: **30.12.2020**
(21) Application number: 10846546.9
(22) Date of filing: 26.02.2010
(51) Int. Cl.: G05F 1/67

(54) **POWER GENERATION SYSTEM**
STROMERZEUGUNGSSYSTEM
SYSTÈME DE PRODUCTION DE PUISSANCE

(43) Date of publication of application: 02.01.2013
(73) Proprietor: Toshiba Mitsubishi-Electric Industrial Systems Corporation, Tokyo 104-0031 (JP); National Institute of Advanced Industrial Science and Technology, Tokyo 100-8921 (JP)
(72) Inventor: IKAWA, Eiichi, Tokyo 108-0073 (JP); FUJIWARA, Naoki, Tokyo 108-0073 (JP); OOZEKI, Takashi, Tokyo 100-8921 (JP); LEE, Kyungsoo, Tokyo 108-0073 (JP)
(74) Representative: Zech, Stefan Markus
(86) International application number: PCT/JP2010/053164
(87) International publication number: WO 2011/104882

(56) References cited:
- EP-A1- 2 019 433
- WO-A2-2006/078685
- JP-A- 2000 232 736
- JP-A- 2003 133 569
- JP-A- 2003 133 569
- JP-A- 2004 077 309
- JP-A- 2005 528 071
- JP-A- 2006 101 591

## Description

### Technical Field

The present invention relates to a power generation system capable of synchronously obtaining output curve characteristics of a photovoltaic array (a PV array) and power generating conditions using, e.g., a supervisory remote control apparatus in a state that a large-scale photovoltaic power generation system or a clustered grid-connected photovoltaic power generation system is installed on the spot.

### Background Art

Patent Literature 1 (Jpn. Pat. Appln. KOKAI Publication No. 2006-201827) discloses a configuration in which a power conditioner has a built-in curve tracer to judge output abnormality of a photovoltaic power generation system in a state that the photovoltaic power generation system is installed in the field.

This curve tracer measures a direct current (I) associated with a direct-current voltage (V) of a photovoltaic cell, traces a direct current (I)-direct-current voltage (V) curve from the measurement values, and displays this trace result in a display unit, whereby visually confirming this display unit enables judging whether the photovoltaic power generation system is normal or abnormal.

In the invention disclosed in Patent Literature 1, solar radiation intensity or an air temperature as power generating conditions for evaluating an output from the photovoltaic power generation system is not traced, and evaluation based on comparison with characteristic estimated value from reference conditions (1 KW/m², 25°C) of the photovoltaic cell is difficult.

Further, in a large-scale system including photovoltaic power generation systems, since each power conditioner has the built-in curve tracer, many curve tracers cannot be managed and controlled in synchronization with each other, and evaluation based on comparison with outputs from the photovoltaic power generation systems under the same power generating conditions is difficult. Moreover, Patent Literature (WO 2006/078685) illustrates evaluation of fault information and performance data of a plurality of photovoltaic panels in a remote computer, but it does not describe tracing and visualization of the photovoltaic power generating conditions. Patent Literature 2 (EP 2 019 433 A1) aims to perform a more detailed failure diagnosis of a photovoltaic device. Provided therein is a photovoltaic device characterization apparatus including a measurement unit for measuring current-voltage characteristic of a photovoltaic device, a conversion unit for converting the current-voltage characteristic measured with the measurement unit into a prescribed reference condition, a memory for storing a plurality of reference characteristics, and a determination unit for comparing the current-voltage characteristic converted into the reference condition and the reference characteristics read from the memory, and determining to which one of the reference characteristics the current-voltage characteristic is closest. The failure diagnosis is not considered to be sufficient, though.

### Disclosure of the Invention

The present invention provides a power generation system according to claim 1 and claim 3: According to the invention, a power generation system including a plurality of photovoltaic power generation systems and a supervisory remote control apparatus which supervises and controls a state of the photovoltaic power generation systems, is provided, characterized by each of photovoltaic power generation systems comprising a photovoltaic array, a power conditioner which converts direct-current power generated by the photovoltaic array into desired direct-current power, further converts it into alternating-current power, and supplies it to the alternating-current power system, or converts direct-current power generated by the photovoltaic array into alternating-current power and supplies it to the alternating-current power system, and a measurement apparatus which measures power generating conditions of the photovoltaic array, a control switching apparatus that switches MPPT control, by which the power conditioner receives a direct-current voltage command or a direct current command and a control switching command from the supervisory remote control apparatus through a communication system and an output from the power conversion apparatus included in the power conditioner becomes maximum, to voltage control or current control using the direct-current voltage command Vref or the direct current command Iref, a power generating condition detector as solar radiation intensity detector including actinometers that measure solar radiation intensity as power generating conditions of the respective photovoltaic arrays, a direct-current voltage detector which detects a direct-current voltage that is an output from the photovoltaic array, a direct current detector which detects a direct current that is an output from the photovoltaic array, where the power generation system further comprises the communication system which has communication apparatuses installed in the supervisory remote control apparatus, the power conditioner, and the measurement apparatus, respectively, and comprises a signal transmission path which enables communication between the communication apparatus in the supervisory remote control apparatus and the communication apparatus in the measurement apparatus and between the communication apparatus in the supervisory remote control apparatus and the communication apparatus in the power conditioner, wherein the supervisory remote control apparatus comprises a curve trace apparatus which is installed in the supervisory remote control apparatus, fetches a direct current detection value detected by the direct current detector and a direct-current voltage detection value detected by the direct-current voltage detector, traces an I-V characteristic diagram of the photovoltaic array, and also traces power generating conditions detected by the power generating condition detector on the I-V characteristic diagram, the I-V characteristic diagram and the power generating condition detection value being traced in synchronization with transmission of the direct-current voltage command or the direct current command and the control switching command from the supervisory remote control apparatus to the control switching apparatus, and the I-V characteristic diagram and the power generating condition detection value being displayed..

Furthermore, the present invention provides a power generation system, characterized by comprising a plurality of photovoltaic arrays, a plurality of power conditioners which converts direct-current power generated by each of the photovoltaic arrays into desired direct-current power, further converts it into alternating-current power, and supplies it to an alternating-current power system, or converts direct-current power generated by each of the photovoltaic arrays into alternating-current power and supplies it to the alternating-current power system; a supervisory remote control apparatus which supervises and controls a state of the photovoltaic power generation systems, and a measurement apparatus which measures power generating conditions of each of the photovoltaic arrays, wherein the power generation system further comprises a communication system which has communication respectively, and comprises a signal transmission path which enables communication between the communication apparatus in the supervisory remote control apparatus and the communication apparatus in the measurement apparatus and between the communication apparatus in the supervisory remote control apparatus and the communication apparatus in each power conditioner, a control switching apparatus that switches MPPT control, by which each power conditioner receives a direct-current voltage command or a direct current command and a control switching command from the supervisory remote control apparatus through the communication system and an output from the power conversion apparatus included in each power conditioner becomes maximum, to voltage control or current control using the direct-current voltage command Vref or the direct current command Iref, at least one power generating condition detector as solar radiation intensity detector including actinometers that measure solar radiation intensity as power generating conditions of the respective photovoltaic arrays, a direct-current voltage detector which detects a direct-current voltage that is an output from each photovoltaic array, a direct current detector which detects a direct current that is an output from each photovoltaic array, and a curve trace apparatus which is installed in the supervisory remote control apparatus, fetches a direct current detection value detected by each direct current detector and a direct-current voltage detection value detected by the direct-current voltage detector, traces an I-V characteristic diagram of each photovoltaic array, and also traces power generating conditions detected by the power generating condition detector on the I-V characteristic diagram of each photovoltaic array, the I-V characteristic diagram of each photovoltaic array and the power generating condition detection value being traced in synchronization with transmission of the direct-current voltage command or the direct current command and the control switching command from the supervisory remote control apparatus to the control switching apparatus, and the I-V characteristic diagram of each photovoltaic array and the power generating condition detection value being displayed. Advantageous further developments according to the invention are set forth in the dependent claims.

### Brief Description of Drawings

FIG. 1 is a schematic block diagram for explaining a first embodiment of a photovoltaic power generation system according to the present invention;
FIG. 2 is a schematic block diagram for explaining a second embodiment of the photovoltaic power generation system according to the present invention;
FIG. 3 is a schematic block diagram for explaining a third embodiment of the photovoltaic power generation system according to the present invention;
FIG. 4 is a schematic block diagram for explaining a fourth embodiment of the photovoltaic power generation system according to the present invention;
FIG. 5 is a schematic block diagram for explaining a fifth embodiment of the photovoltaic power generation system according to the present invention;
FIG. 6 is a schematic block diagram for explaining a sixth embodiment of the photovoltaic power generation system according to the present invention;
FIG. 7 is a schematic block diagram for explaining a seventh embodiment of the photovoltaic power generation system according to the present invention;
FIG. 8 is a schematic block diagram for explaining an eighth embodiment of the photovoltaic power generation system according to the present invention;
FIG. 9 is a schematic block diagram for explaining a ninth embodiment of the photovoltaic power generation system according to the present invention;
FIG. 10 is a schematic block diagram for explaining a 10th embodiment of the photovoltaic power generation system according to the present invention;
FIG. 11 is a schematic block diagram for explaining an 11th embodiment of the photovoltaic power generation system according to the present invention;
FIG. 12 is a schematic block diagram for explaining a 12th embodiment of the photovoltaic power generation system according to the present invention;
FIG. 13 is a schematic block diagram for explaining a 13th embodiment of the photovoltaic power generation system according to the present invention;
FIG. 14 is a flowchart for explaining an operation of the first embodiment of the photovoltaic power generation system according to the present invention;
FIG. 15 is a flowchart for explaining the operation of the first embodiment of the photovoltaic power generation system according to the present invention;
FIG. 16 is an operation explanatory view for explaining of an operation of each unit of the first embodiment in the photovoltaic power generation system according to the present invention;
FIG. 17 is an operation explanatory view for explaining of the operation of each unit of the first embodiment in the photovoltaic power generation system according to the present invention;
FIG. 18 is an operation explanatory view for explaining of the operation of each unit of the first embodiment in the photovoltaic power generation system according to the present invention;
FIG. 19A is a view for explaining a display method of a display apparatus that displays an output from a curve trace apparatus in the photovoltaic power generation system according to the present invention;
FIG. 19B is a view for explaining the display method of the display apparatus that displays an output from a curve trace apparatus in the photovoltaic power generation system according to the present invention;
FIG. 19C is a view for explaining the display method of the display apparatus that displays an output from a curve trace apparatus in the photovoltaic power generation system according to the present invention;
FIG. 20A is a view for explaining the display method of the display apparatus that displays an output from the curve trace apparatus in the photovoltaic power generation system according to the present invention;
FIG. 20B is a view for explaining the display method of the display apparatus that displays an output from the curve trace apparatus in the photovoltaic power generation system according to the present invention;
FIG. 21 is a view for explaining the display method of the display apparatus that displays an output from the curve trace apparatus in the photovoltaic power generation system according to the present invention;
FIG. 22A is a view for explaining the display method of the display apparatus that displays an output from the curve trace apparatus in the photovoltaic power generation system according to the present invention;
FIG. 22B is a view for explaining the display method of the display apparatus that displays an output from the curve trace apparatus in the photovoltaic power generation system according to the present invention;
FIG. 22C is a view for explaining the display method of the display apparatus that displays an output from the curve trace apparatus in the photovoltaic power generation system according to the present invention;
FIG. 23A is a view for explaining the display method of the display apparatus that displays an output from the curve trace apparatus in the photovoltaic power generation system according to the present invention;
FIG. 23B is a view for explaining the display method of the display apparatus that displays an output from the curve trace apparatus in the photovoltaic power generation system according to the present invention; and
FIG. 24 is a view for explaining the display method of the display apparatus that displays an output from the curve trace apparatus in the photovoltaic power generation system according to the present invention.

### Description of Embodiments

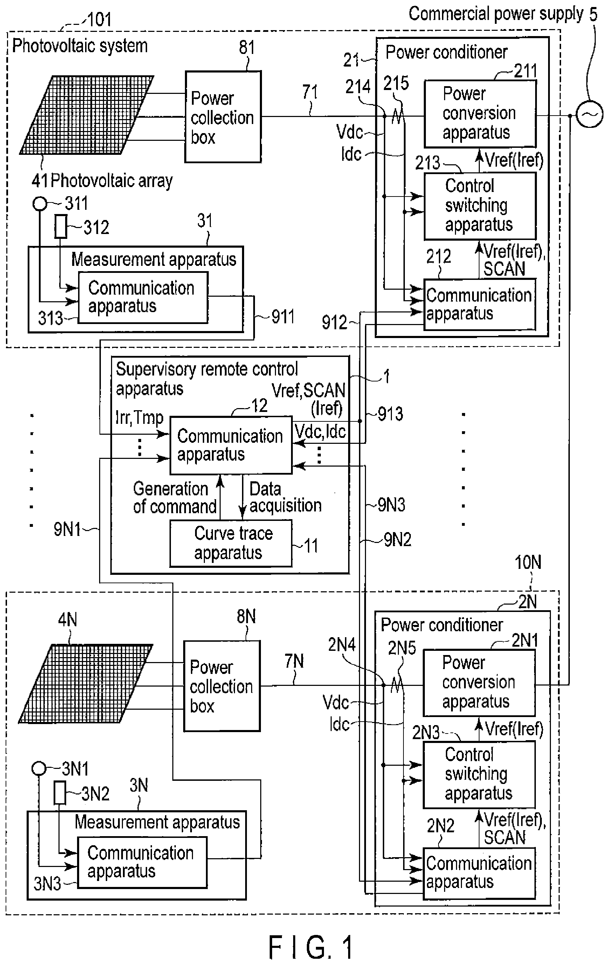

FIG. 1 is a schematic block diagram for explaining a first embodiment of the present invention; this embodiment comprises photovoltaic power generation systems 101 ... 10N and one supervisory remote control apparatus 1, and direct-current power generated by the respective photovoltaic generation systems 101 ... 10n is converted into alternating-current power by respective power conditioners 21 ... 2N and supplied to a commercial power supply (an alternating-current power system) 5. The supervisory remote control apparatus 1 supervises and controls states of the photovoltaic power generation systems 101 ... 10N.

The photovoltaic power generation system 101 comprises a photovoltaic array 41, the power conditioner 21 that converts the direct-current power generated by the photovoltaic array 41 into the alternating-current power and supplies this power to the alternating-current power system 5, a power collection box 81 and a cable run 71 which are arranged between the photovoltaic array 41 and the power conditioner 21, and a measurement apparatus 31 that measures power generating conditions of the photovoltaic array 41.

Like the photovoltaic power generation system 101, the photovoltaic power generation system 10N comprises one photovoltaic array 4N, the power conditioner 2N that converts the direct-current power generated by the photovoltaic array 4N into the alternating-current power and supplies this power to the alternating-current power system 5, a power collection box 8N and a cable run 7N which are arranged between the photovoltaic array 4N and the power conditioner 2N, and a measurement apparatus 3N that measures power generating conditions of the photovoltaic array 4N.

Here, the photovoltaic array means one obtained by combining photovoltaic cells as a minimum unit of a photovoltaic battery to constitute each photovoltaic module (a photovoltaic panel) and connecting these photovoltaic modules in series, parallel, or series-parallel, one photovoltaic array will be referred to as one group or one unit, and a plurality of photovoltaic arrays will be referred to as groups or units.

Communication apparatuses 12, 212 ... 2N2, 313 ... 3N3 are installed in the supervisory remote control apparatus 1, and the power conditions 21 ... 2N and the measurement apparatuses 31 ... 3N in the respective groups, thereby providing a communication system comprising signal transmission paths 911 ... 9N1, 912 ... 9N2, and 913 ... 9N3 that enable communication between the communication apparatus 12 of the supervisory remote control apparatus 1 and the communication apparatuses 313 ... 3N3 of the measurement apparatuses 31 ... 3N and between the communication apparatus 12 of the supervisory remote control apparatus 1 and the communication apparatuses 212 ... 2N2 of the respective power conditioners 21 ... 2N.

The power conditioner 21 comprises a power conversion apparatus 211, a control switching apparatus 213, the communication apparatus 212, a direct-current voltage detector 214 that detects a direct-current voltage as an input to the power conversion apparatus 211 and an output from the photovoltaic array 41 and supplies this direct-current voltage detection value Vdc to the control switching apparatus 213 and the communication apparatus 212, and a direct current detector 215 that detects a direct current as an input to the power conversion apparatus 211 and an output from the photovoltaic array 41 and supplies this direct current detection value Idc to the control switching apparatus 213 and the communication apparatus 212.

The control switching apparatus 213 switches max power point tracking (MPPT) control for controlling in such a manner that the power conditioner 21 can receive a direct-current voltage command Vref or a direct current command Iref and a control switching command SCAN from the supervisory remote control apparatus 1 through the communication system and an output from the power conversion apparatus 211 included in the power conditioner 21 can become maximum for voltage control or current control based on the direct-current voltage command Vref or the direct current command Iref.

Furthermore, like the power conditioner 21, the power conditioner 2N comprises a power conversion apparatus 2N1, a control switching apparatus 2N3, the communication apparatus 2N2, a direct-current voltage detector 2N4 that detects a direct-current voltage as an input to the power conversion apparatus 2N1 and an output from the photovoltaic array 4N and supplies this direct-current voltage detection value Vdc to the control switching apparatus 2N3 and the communication apparatus 2N2, and a direct current detector 215 that detects a direct current as an input to the power conversion apparatus 2N1 and an output from the photovoltaic array 4N and supplies this direct current detection value Idc to the control switching apparatus 2N3 and the communication apparatus 2N2.

The control switching apparatus 2N3 switches the MPPT control for controlling in such a manner that the power conditioner 2N can receive the direct-current voltage command Vref or the direct current command Iref and the control switch command SCAN from the supervisory remote control apparatus 1 through the communication system and an output from the power conversion apparatus 2N1 included in the power conditioner 2N can become maximum to voltage control or current control based on the direct-current voltage command Vref or the direct current command Iref.

The measurement apparatuses 31 ... 3N have at least one (provided in accordance with each of the photovoltaic arrays 41 ... 4N in this example) solar radiation intensity detector and the communication apparatuses 313 ... 3N, the solar radiation intensity detector including actinometers 311 ... 3N1 that measure solar radiation intensity as power generating conditions of the respective photovoltaic arrays 41 ... 4N and air temperature gauges 312 ... 3N2 that detect and measure air temperatures at places where the photovoltaic arrays 41 ... 4N are installed.

The supervisory remote control apparatus 1 comprises a later-described curve trace apparatus 11 and the communication apparatus 12. The curve trace apparatus 11 is installed in the supervisory remote control apparatus 1, fetches direct current detection values (I) detected by the respective direct current detectors 215 ... 2N5 included in the respective power conditioners 21 ... 2N and direct-current voltage values (V) detected by the respective direct-current voltage detectors 214 ... 2N4 included in the respective power conditioners 21 ... 2N, thereby traces I-V characteristic diagrams for the respective photovoltaic arrays 41 ... 4N, and traces the solar radiation intensity detection values and air temperature detection values detected by the measurement apparatuses 31 ... 3N in the I-V characteristic diagrams for the respective photovoltaic arrays 41 ... 4N; tracing of the I-V characteristic diagrams for the respective photovoltaic arrays 41 ... 4N, the solar radiation intensity detection values, and the air temperature detection values is carried out in synchronization with transmission of the direct-current voltage command Vref or the direct current command Iref given to the control switching apparatuses 213 ... 2N3 included in the respective power conditioners 21 ... 2N and the control switching command SCAN to the control switching apparatuses 213 ... 2N3 included in the respective power conditioners 21 ... 2N from the supervisory remote control apparatus 1 through the communication system, i.e., the communication apparatus 12, the signal transmission paths 912 ... 9N2, and the communication apparatuses 212 ... 2N2.

The power collection boxes 81 ... 8N accommodate diodes that prevent outputs from the photovoltaic arrays 41 ... 4N from flowing back to a plurality of (three in this embodiment) photovoltaic modules constituting the respective photovoltaic arrays 41 ... 4N, switches used when performing maintenance and inspection of the photovoltaic power generation system, and others.

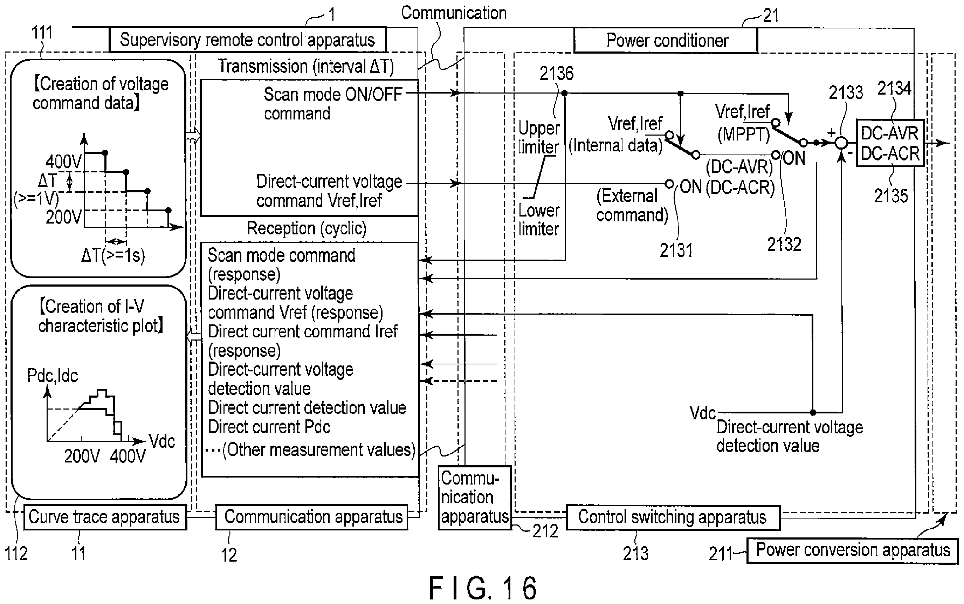

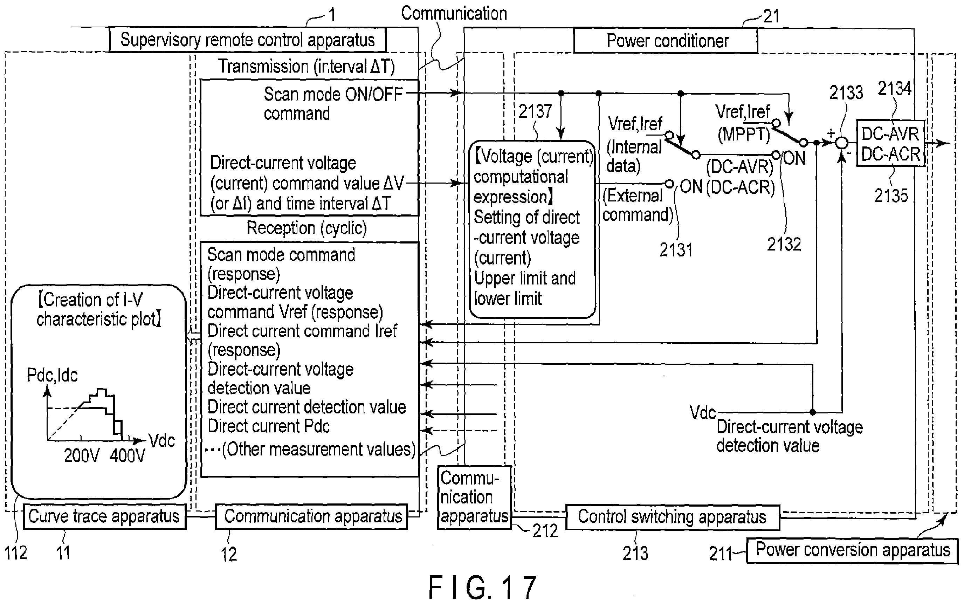

Although a flow of signals between the supervisory remote control apparatus 1 and the power conditioners 21 ... N1 (21 of these power conditioners) will now be described with reference to FIG. 16 and FIG. 17, the power collection box 81 in FIG. 1 is omitted in both the drawings.

FIG. 16 shows that I-V curve scan command data is executed based on a sampling system. The curve trace apparatus 11 included in the supervisory remote control apparatus 1 comprises a command data creation apparatus 111 and an I-V characteristic plot creation apparatus 112.

The command data creation apparatus 111 creates command data in accordance with a scan mode ON/OFF command, the direct-current voltage command Vref or the direct current command Iref, and a cycle ΔT, e.g., every 1 second in response to the control switching command SCAN, and thereby sets a direct-current voltage command value (a direct current command value).

The communication apparatus 12 transmits the direct-current voltage command value or the direct current command value set by the command data creation apparatus 111 to the communication apparatus 212 of the power conditioner 21 through a signal transmission path. The direct-current voltage command value (the direct current command value) is supplied to the power conditioner 21 in accordance with the cycle received by the communication apparatus 212. When the scan mode is changed to ON, the control switching apparatus 213 of the power conditioner 21 inputs the direct-current voltage command value or the direct current command value as an external command to the power conditioner 21 in accordance with the cycle received through the communication and performs the I-V curve scan. Further, the communication apparatus 212 transmits (returns) the direct-current voltage command (the direct-current voltage command) from the control switching apparatus 213, the direct-current voltage detection value and the direct current detection value detected by the detector, and direct-current power calculated based on these values to the communication apparatus 212, and the I-V characteristic plot creation apparatus 11 creates an I-V characteristic plot.

FIG. 17 shows that the I-V curve scan command data is executed based on a collective system. Although the curve trace apparatus 11 included in the supervisory remote control apparatus 1 comprises the I-V characteristic plot creation apparatus 112, it does not comprise a command data creation apparatus, and it is configured to perform output in accordance with the scan mode ON/OFF command, the direct-current voltage command value or the direct current command value, and the cycle Δ, e.g., 1 second. The power conditioner 21 comprises a setting unit 2137 so that a direct-current voltage command computational expression or a direct current command computational expression can be set. The control switching apparatus 213 in the power conditioner 21 performs the I-V curve scan based on the communication when the scan mode is changed to ON, inputs the voltage command, the current command, and the cycle command to the command computational expression, thereby calculating an external command based on the command computational expression. The thus obtained direct-current voltage command or direct current command is returned to the supervisory remote control apparatus 1 by the communication apparatus, and the I-V characteristic plot creation apparatus 11 creates an I-V characteristic plot.

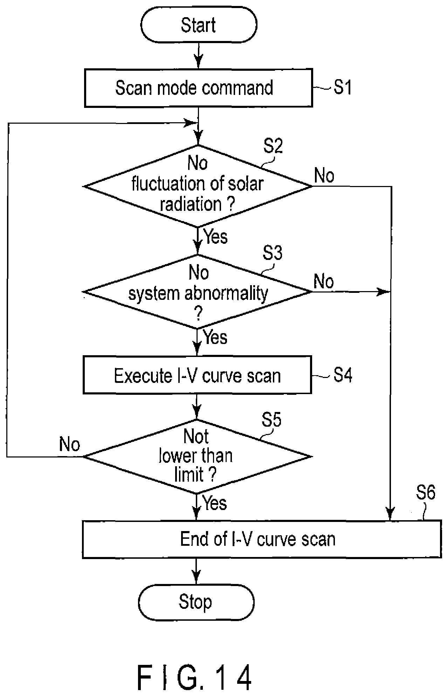

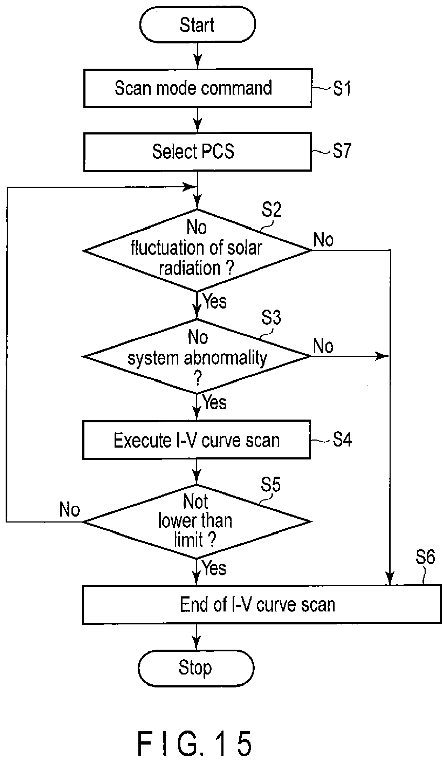

The above-described operation of the curve trace apparatus 1 is carried out as shown in FIG. 14 or FIG. 15, and I-V curve scan is stopped if solar radiation fluctuates during the I-V curve scan in any case. Specifically, in FIG. 14, for example, when a scan mode command Vref_scan or Iref_scan is issued to the power conditioner 21 from the voltage command data creation apparatus 111 in FIG. 1 and FIG. 16 (S1), whether solar radiation intensity measured by the actinometers 311 ... 3N1 has fluctuated is judged (S2), and the I-V curve scan is terminated when the solar radiation has fluctuated (S6). When there is no fluctuation in solar radiation at S2, whether system abnormality is observed is judged (S3), and the I-V curve scan is terminated when the system abnormality is observed (S6). If the system abnormality is not observed at S3, the I-V curve scan is executed (S4), and whether this scan value is not smaller than a limit is judged (S5). If this value is not smaller than the limit at S5, the I-V curve scan is terminated (S6). When this value is not smaller than the limit at S6, the control returns to S2, and whether solar radiation has fluctuated is judged. It is to be noted that, at S6, the I-V curve scan is continued if the scan voltage Vref_scan or the scan current Iref_scan11 is not equal to or larger than a set limit Vdclimit or Idc_limit, and the I-V curve scan is terminated if the same voltage or current is equal to or above a limit Vdclimit or Idc_limit.

Like FIG. 14, the I-V curve scan is carried out as shown in FIG. 15. When solar radiation fluctuates during the I-V curve scan, the I-V curve scan is stopped. FIG. 15 shows an example of moving the I-V curve scan in accordance with each group, and a step of making a selection from the power conditioners 21 ... 2N is added between S1 and S2 in FIG. 14. As this selection, an odd number, an even number, a string converter on the photovoltaic (PV) module side, or the like is freely selected. Steps other than one described above are equal to those in FIG. 14, and hence like reference numerals denote like parts to omit a description thereof.

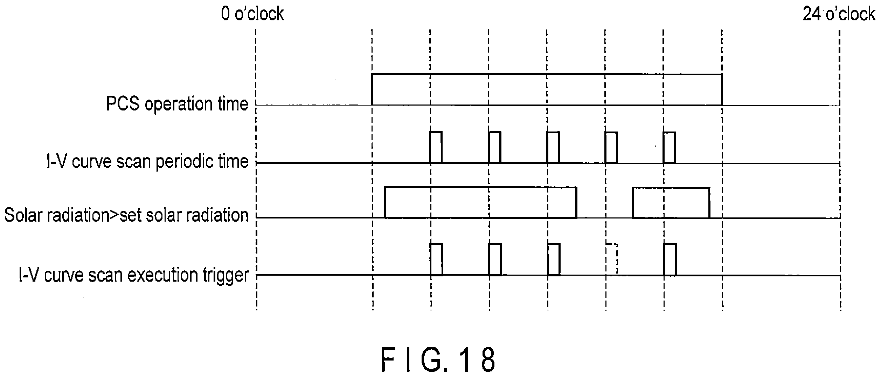

FIG. 18 illustrates operation times for executing the I-V curve scan in a day. In FIG. 18, a PCS operation time means a time during which the PCS operates in a day. An I-V curve scan periodic time means a time during which the I-V curve scan is periodically executed in the PCS operation time. In regard to solar radiation>set solar radiation and an I-V curve scan execution trigger, the I-V curve scan execution trigger is output when solar radiation is larger than the set solar radiation in the periodic time, but the I-V curve scan execution trigger is not output when solar radiation is smaller than the set solar radiation. When this concept shown in FIG. 18 is expanded and a function for making reference to external data, e.g., a function for fetching information such as a weather forecast is added, curve tracing that is efficient for determining a measurement schedule is enabled.

According to the first embodiment, since solar radiation intensity or an air temperature as measurement conditions for evaluating an output from the photovoltaic power generation system is drawn in the characteristic diagram traced by the curve trace apparatus 11, evaluation based on comparison with a characteristic estimated value under the reference conditions (1 KW/m², 25°C) of the photovoltaic cell can be easily performed.

Further, according to the first embodiment, in the large-scale system including the photovoltaic power generation systems, I-V curves and/or P-V curves in the photovoltaic arrays 41 ... 4N can be managed and controlled in synchronization with each other by the supervisory remote control apparatus 1, and evaluation based on comparison of outputs from the photovoltaic power generation systems under the same power generating conditions can be easily carried out.

Furthermore, since output curve characteristics of the photovoltaic arrays 41 ... 4N and the power generating conditions are obtained in synchronization with each other by the supervisory remote control apparatus 1 in a state that the photovoltaic power generation system is installed on the spot, the photovoltaic arrays 41 ... 4N can be readily evaluated.

Moreover, it is possible to perform a deterioration analysis of the photovoltaic arrays 41 ... 4N, a characteristic analysis of long-term operations of the power conditioners (PCS) 21 ... 2N, and determination of an accurate maximum power point.

Additionally, an impact diagnosis of an environment of the photovoltaic arrays 41 ... 4N, solar radiation based on installation conditions, an air temperature, and sun shadow can be carried out, and deterioration of the photovoltaic arrays 41 ... 4N or fouling due to dust or stains can be also analyzed.

Further, it is possible to perform an impact diagnosis of a voltage drop due to a wiring impedance between the respective photovoltaic arrays 41 ... 4N and the respective power conditioners 21 ... 2N or a characteristic analysis of operations of the power conditioners 21 ... 2N; specifically, control performance of a maximum power point tracing apparatus (MPPT), loss evaluation, and an age deterioration analysis.

The following points, which are problems in Patent Literature 1, can be improved upon. That is, it is possible to make an impact diagnosis of an environment of the photovoltaic arrays 41 ... 4N and solar radiation, an air temperature, and sun shadow meeting the installation conditions. Furthermore, data of the photovoltaic power generation systems 101 ... 10N can be synchronously obtained, and comparison and evaluation of characteristics can be easily carried out. Moreover, output curve characteristics of the photovoltaic arrays 41 ... 4N and power generating conditions can be synchronously obtained by the supervisory remote control apparatus 1.

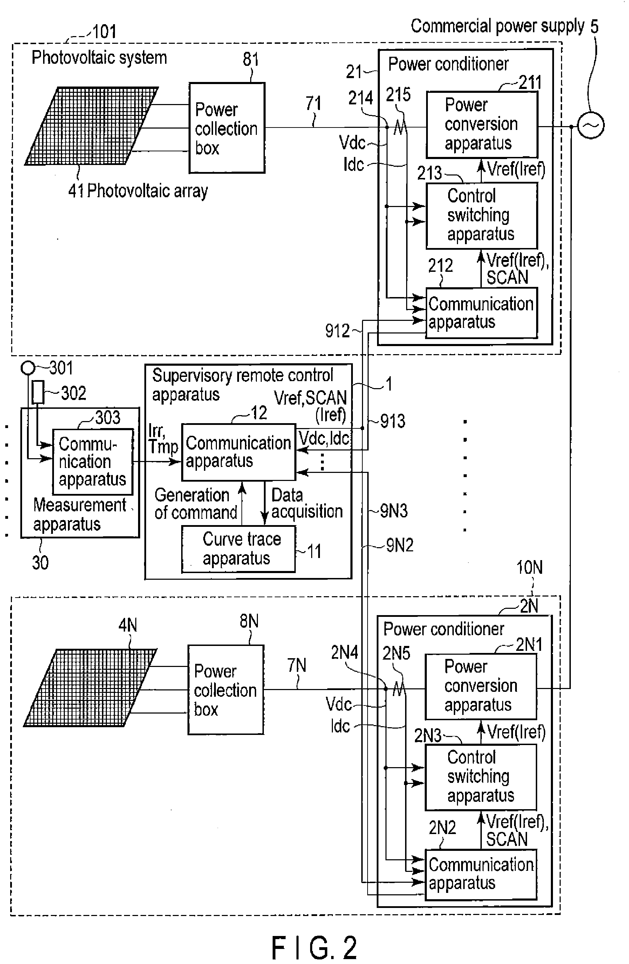

FIG. 2 is a schematic block diagram for explaining a second embodiment of the present invention, and it is different from the embodiment depicted in FIG. 1 in that one measurement apparatus 30 having an actinometer 301 and an air temperature gauge 302 is provided to a specific one of the photovoltaic arrays 41 ... 4N or one position other than this place, whereas each of the measurement apparatuses 31 ... 3N having actinometers 311 ... 3N1 and the air temperature gauges 312 ...3N2 as one of the power generating conditions is provided in accordance with each of the photovoltaic arrays 41 ... 4N in the embodiment depicted in FIG. 1. A solar radiation intensity detection value Irr obtained by actinometer 301 and an air temperature detection value Tmp obtained by the air temperature gauge 302 measured by the measurement apparatus 30 are transmitted to a curve trace apparatus 11 through a communication apparatus 303 included in the measurement apparatus 30, a communication apparatus 12 included in a supervisory remote control apparatus 1, and a signal transmission path connecting these apparatuses.

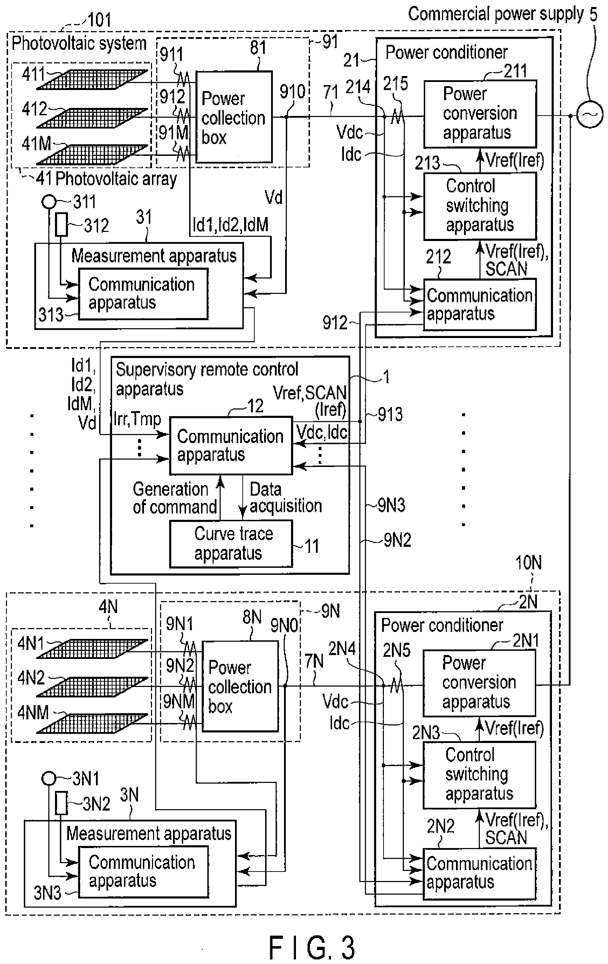

FIG. 3 is a schematic block diagram for explaining a third embodiment according to the present invention, and it is different from the embodiment depicted in FIG. 1 in that power collection box apparatuses 91 ... 9N comprising power collection boxes 81 ... 8N and direct current detectors 911, 912 ... 91M, ... 9N1, 9N2 ... 9NM are newly provided in place of the power collection boxes 81 ... 8N, and the power collection box apparatuses 91 ... 9N are configured as follows. That is, the direct current detectors 911, 912 ... 91M, ... 9N1, 9N2 ... 9NM are provided at connecting points of photovoltaic modules 411, 412 ... 41M, ... 4N1, 4N2 ... 4NM constituting respective photovoltaic arrays 41 ... 4N and the power collection boxes 81 ... 8N, direct-current voltage detectors 910 ... 9M0 are newly provided at a connecting point of the power collection box 81 and a power conditioner 21 and a connecting point of the power collection box 8N and the power conditioner 2N, and detection values obtained by the direct current detectors 911, 912 ... 91M, ... 9N1, 9N2 ... 9NM and detection values of the direct-current voltage detectors 910 ... 9M0 are input to a curve trace apparatus 11 through communication apparatuses 313 and 12.

According to the third embodiment, I-V curve scan for each photovoltaic module and each photovoltaic array can be carried out by the curve trace apparatus 11.

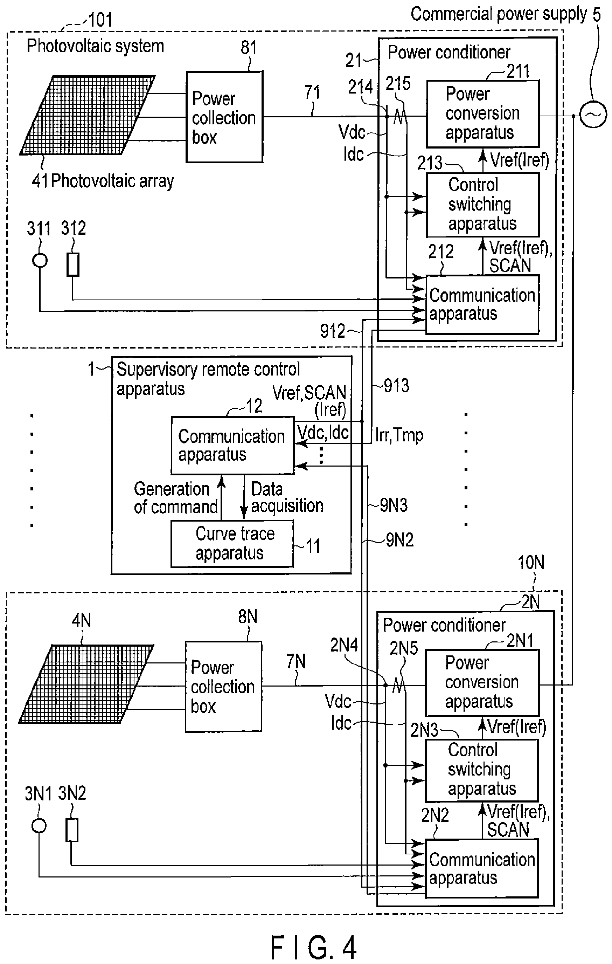

FIG. 4 is a schematic block diagram for explaining a fourth embodiment of the present invention, and it is different from the embodiment depicted in FIG. 1 in that the measurement apparatuses 31 ... 3N are not provided and solar radiation intensity detection values and air temperature detection values measured by actinometers 311 ... 3N1 and air temperature gauges 312 ... 3N2 are input to a curve trace apparatus 11 through communication apparatuses 212 ... 2N2 and a communication apparatus 12. This embodiment can be applied to a clustered grid-connected photovoltaic system, e.g., a residential photovoltaic system.

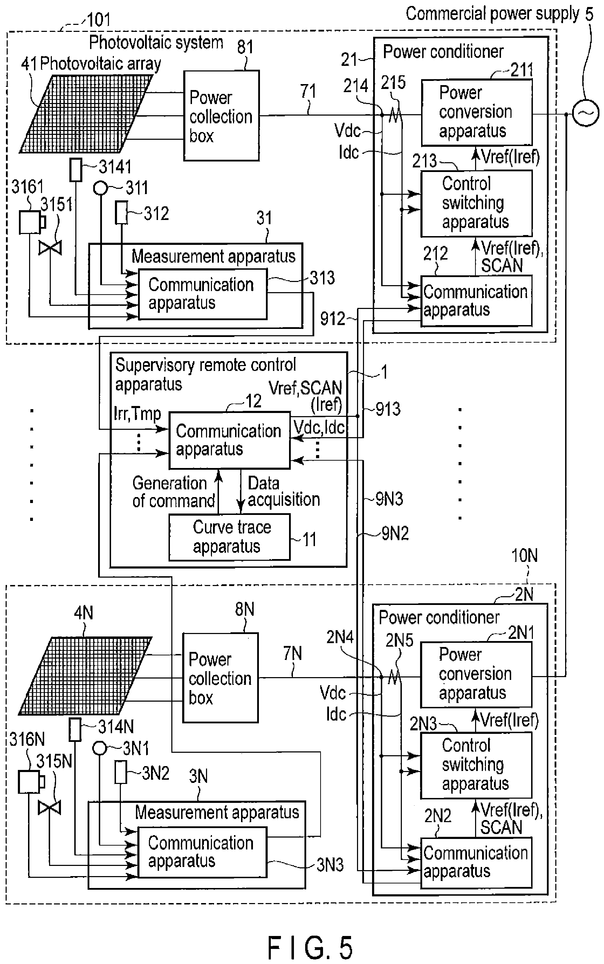

FIG. 5 is a schematic block diagram for explaining a fifth embodiment according to the present invention, and it is different from the embodiment depicted in FIG. 1 in that industrial cameras 3161 ... 316N that enable visually confirming a solar radiation environment of array or module installing positions and anemometers 3151 ... 315N that measure wind velocities are newly added as measurement apparatuses 31 ... 3N that detect power generating conditions, respectively.

When the industrial cameras 3161 ... 316N and the anemometers 3151 ... 315N are newly provided in this manner, an accuracy for scan evaluation of photovoltaic characteristics measurement conditions can be improved.

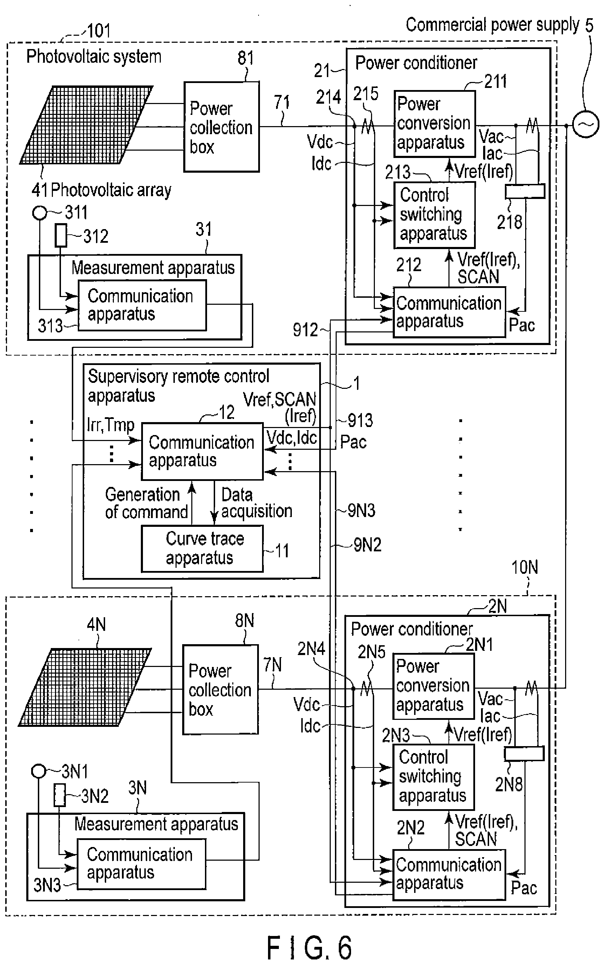

FIG. 6 is a schematic block diagram for explaining a sixth embodiment of the present invention, and it is different from the embodiment depicted in FIG. 1 in that alternating-current voltage detectors 216 ... 2N6 and alternating current detectors 217 ... 2N7 are newly provided on output sides of respective power conversion apparatuses 211 ... 2N1, alternating-current power arithmetic units 218 ... 2N8 that calculate alternating-current power based on these alternating-current detection values are provided, and calculated values of the alternating-current power arithmetic units 218 ... 2N8 are led to a curve trace apparatus 11 through communication apparatuses 212 ...2N2 and 12. As a result, in the curve trace apparatus 11, since a characteristic diagram of the direct-current power and a characteristic diagram of the alternating-current power can be simultaneously displayed, characteristics of the photovoltaic power generation system including the power conditioners 21 ... 2N can be evaluated.

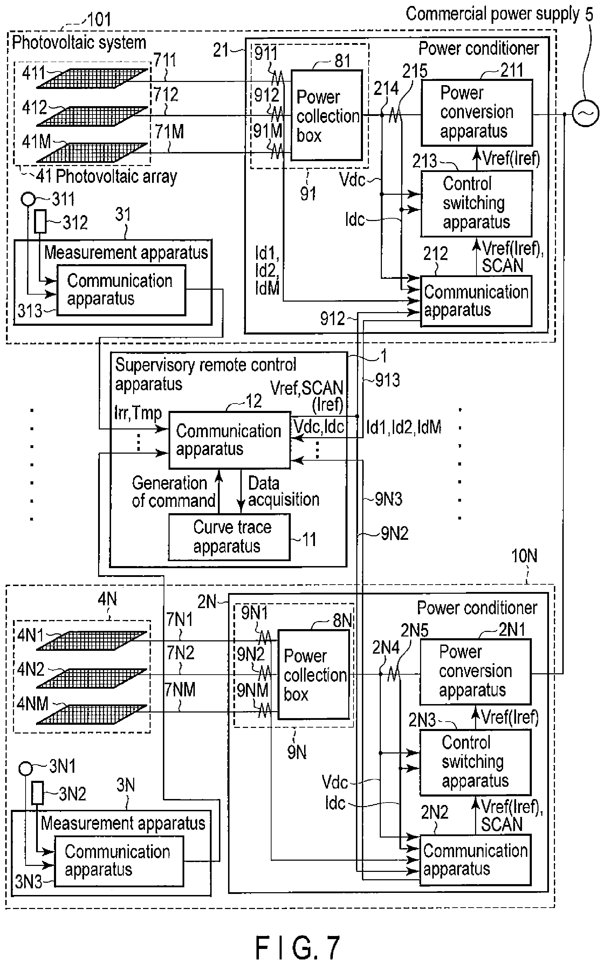

FIG. 7 is a schematic block diagram for explaining a seventh embodiment according to the present invention, and it is different from the embodiment depicted in FIG. 1 in that the power collection boxes 81 ... 8N are not provided, but new power collection box apparatuses 91 ... 9N are provided in power conditioners 21 ... 2N, and the power collection box apparatuses 91 ... 9N are configured as follows. That is, to detect a direct current of each module constituting the array, direct current detectors 911, 912, ... 91M ... 9N1, 9N2, ... 9NM are provided to direct-current bus lines 711, 712, ... 71M ... 7N1, 7N2, ... 7NM connecting the respective modules to power collection boxes 81 ... 8N, and the direct current detectors 911, 912, ... 91M ... 9N1, 9N2, ... 9NM and the power collection boxes 81 ... 8N are provided in the power conditioners 21 ... 21N, respectively.

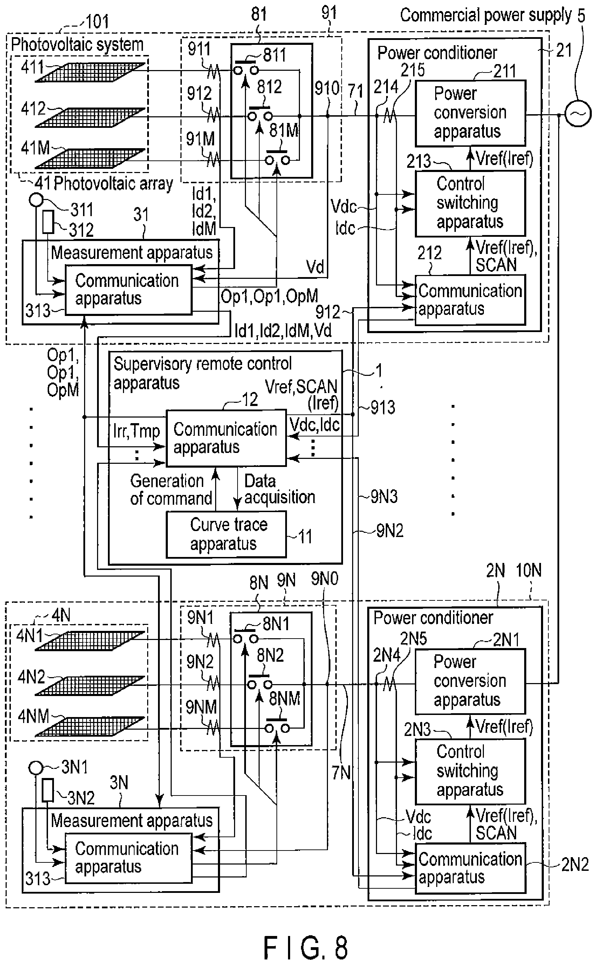

FIG. 8 is a schematic block diagram for explaining an eighth embodiment according to the present invention, and it is different from the embodiment depicted in FIG. 1 in that the power collection boxes 81 ... 8N are not provided, but new power collection box apparatuses 91 ... 9N are provided, and the power collection box apparatuses 91 ... 9N are configured as follows. That is, they are provided to direct-current bus lines 71 ... 7N of the respective modules constituting an array and power conditioners 21 ... 2N, and the power collection box apparatuses 91 ... 9N are configured as follows. That is, to detect a direct current for each of modules 411, 412, ... 41M ... 4N1, 4N2, ... 4NM constituting the array, direct current detectors 911, 912, ... 91M ... 9N1, 9N2, ... 9NM are provided to the direct-current bus lines 71 ... 7N connecting the respective modules to the power collection boxes 8N, switches 811, 812 ... 81M, 8N1, 8N2 ... and 8NM are connected to the direct current detectors 911, 912, ... 91M ... 9N1, 9N2, ... 9NM in series in the power collection boxes 81 ... 8N, and a curve trace apparatus 11 of a supervisory remote control apparatus 1 is configured to enable selecting operations of the switches 811, 812 ... 81M, 8N1, 8N2 ... 8NM through communication apparatuses 31 ... 3N, and 12.

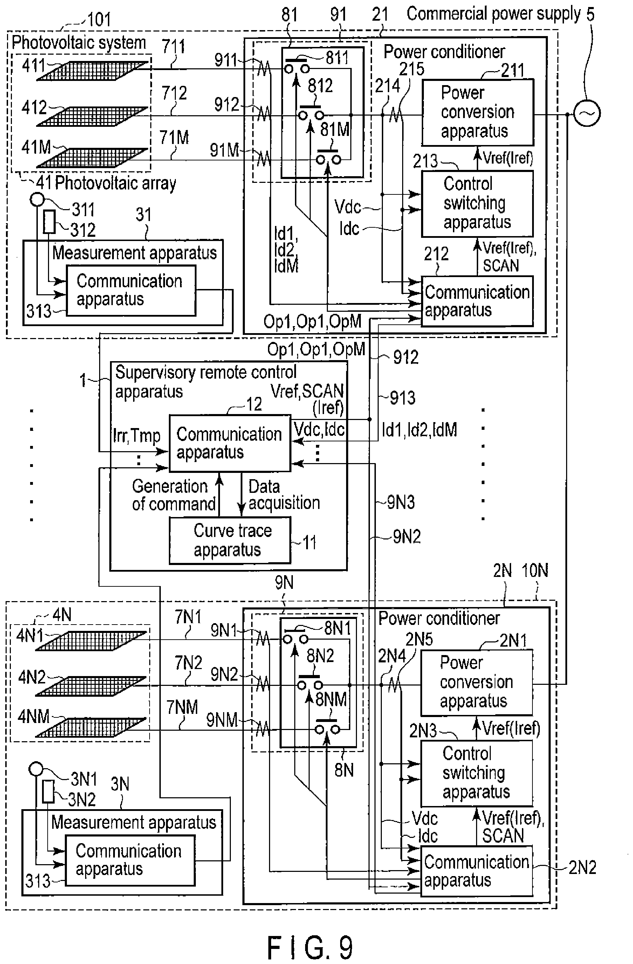

FIG. 9 is a schematic block diagram for explaining a ninth embodiment according to the present invention, and it is different from the embodiment shown in FIG. 1 in that the power collection boxes 81 ... 8N are not provided, but new power collection box apparatuses 91 ... 9N are provided in power conditioners 21 ... 2N, and the power collection box apparatuses 91 ... 9N are configured as follows. That is, to detect a direct current of each module constituting an array, direct current detectors 911, 912, ... 91M ... 9N1, 9N2, ... 9NM are provided to direct-current bus lines 711, 712, ... 71M ... 7N1, 7N2, ... 7NM connecting the respective modules to the power collection boxes 81 ... 8N, the direct current detectors 911, 912, ... 91M ... 9N1, 9N2, ... 9NM and the power collection boxes 81 ... 8N are provided in power conditioners 21 ... 2N, switches 811, 812 ... 81M, 8N1, 8N2 ... 8NM are connected to the direct current detectors 911, 912, ... 91M ... 9N1, 9N2, ... 9NM in series in the power collection boxes 81 ... 8N, and a curve trace apparatus 11 of a supervisory remote control apparatus 1 is configured to enable selecting operations of the switches 811, 812 ... 81M, 8N1, 8N2 ... 8NM through communication apparatuses 212 ... 2N2, and 12.

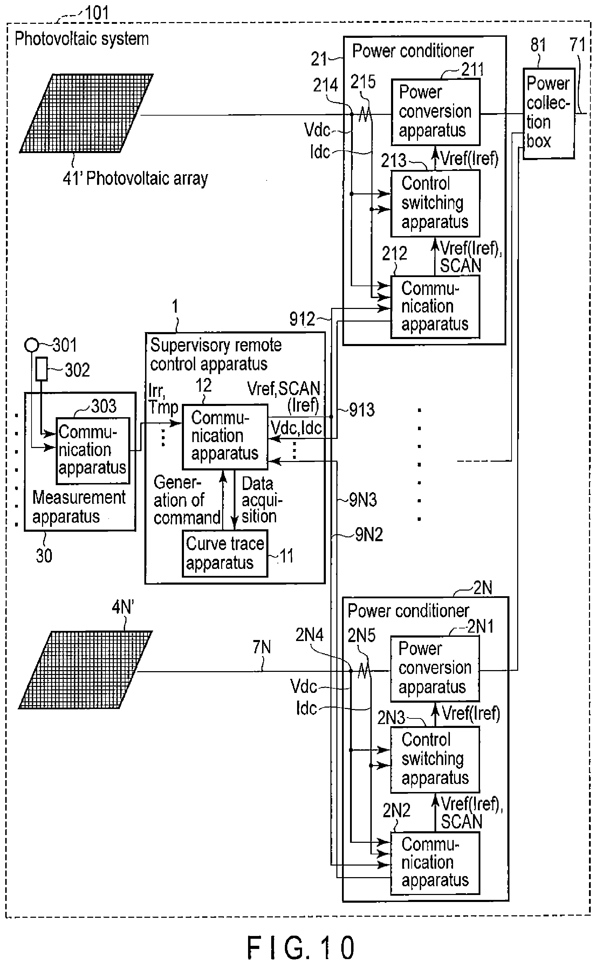

FIG. 10 is a schematic block diagram for explaining a 10th embodiment according to the present invention, and it is different from the embodiment depicted in FIG. 1 in that the power conditioners 21 ... 2N provided to the direct-current bus lines 71 ... 7N of the power collection boxes 81 ... 8N and the power system (the commercial power supply) 5 in FIG. 1 are not provided, and they are provided to direct current cable runs between arrays or modules 41' ... 4N7' and the power collection boxes 81 ... 8N, one measurement apparatus 30 having an actinometer 301 and an air temperature gauge 302 is arranged at a specific one of photovoltaic arrays 41 ... 4N or one position other than this location, whereas the measurement apparatuses 31 ... 3N having the actinometers 311 and the air temperature gauges 312 ... 3N2 as one of power generating conditions are provided in accordance with the respective photovoltaic arrays 41 ... 4N in the embodiment shown in FIG. 1.

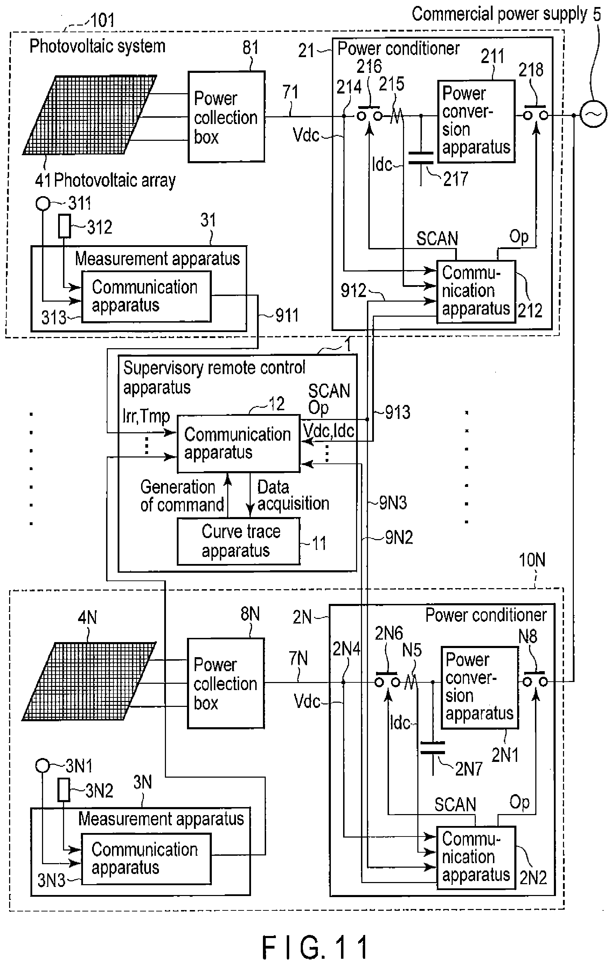

FIG. 11 is a schematic block diagram for explaining an 11th embodiment according to the present invention, and it is different from the embodiment depicted in FIG. 1 in that the following configuration is adopted so that initial charging of smoothing capacitors 217 ... 2N7 usually provided on input sides of the power conversion apparatuses 211 ... 2N1 of the power conditioners 21 ... 2N in FIG. 1 can be carried out in synchronization. That is, switches 216 ... 2N6 and 218 ... 2N8 are provided on input sides and output sides of power conversion apparatuses 211 ... 2N1, and the switches 216 ... 2N6 and 218 ... 2N8 are controlled to be opened or closed by a curve trace apparatus 11 through communication apparatuses 212 ... 2N2 and 12, thereby performing the initial charging of the smoothing capacitors 217 ... 2N7 in synchronization.

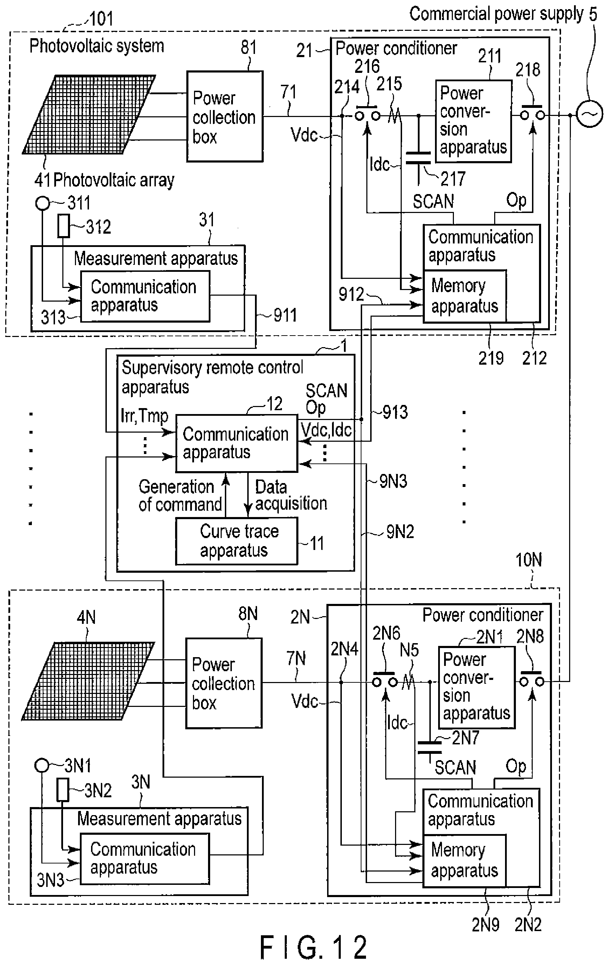

FIG. 12 is a schematic block diagram for explaining a 12th embodiment according to the present invention, and it is different from the embodiment depicted in FIG. 1 in that the following configuration is adopted so that initial charging of smoothing capacitors 217 ... 2N7 usually provided on input sides of the power conversion apparatuses 211 ... 2N1 of the power conditioners 21 ... 2N in FIG. 1 can be carried out in synchronization. That is, recording apparatuses 219 ... 2N9 that temporarily record detection values detected by direct-current voltage detectors 214 ... 2N4 and direct current detectors 215 ... 2N5 required for scanning an I-V curve are provided to, e.g., communication apparatuses 212 ... 2N2 of the power conditioners 21 ... 2N, direct-current voltage detection values and direct current detection values recorded by the recording apparatuses 219 ... 2N9 are read out by a curve trace apparatus 11 through the communication apparatuses 212 ... 2N2 and 12, and the I-V curve is scanned based on these values. Adopting such a configuration enables scanning the I-V curve even if operations of switches 216 ... 2N6 are slowed down.

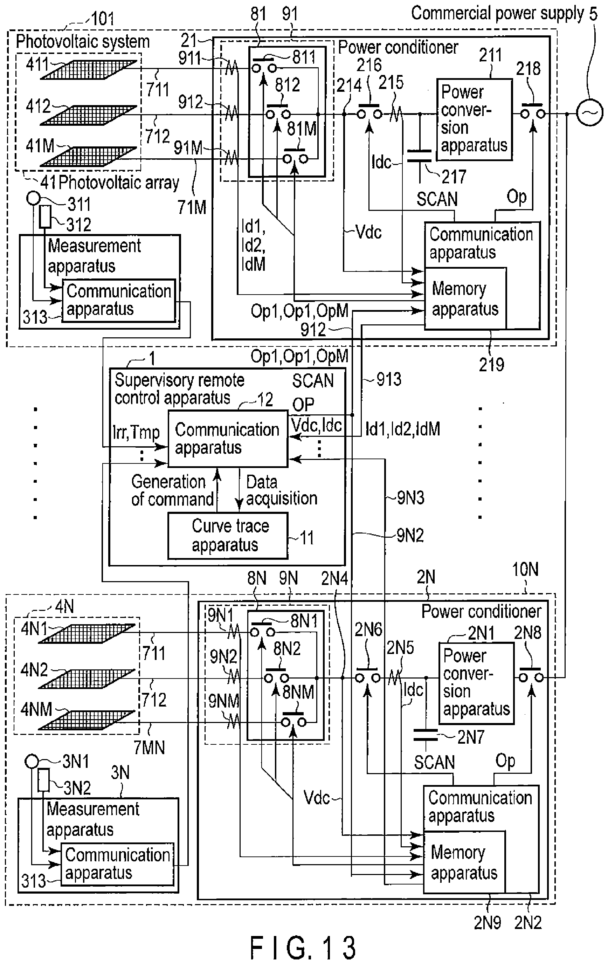

FIG. 13 is a schematic block diagram for explaining a 13th embodiment according to the present invention, and it is different from the embodiment depicted in FIG. 1 in that the power collection boxes 81 ... 8N in FIG. 1 are not provided, but new power collection box apparatuses 91 ... 9N are provided in power conditioners 21 ... 2N, and the following configuration is adopted so that initial charging of smoothing capacitors 217 ... 2N7 usually provided on input sides of power conversion apparatuses 211 ... 2N1 of the power conditioners 21 ... 2N in FIG. 1 can be carried out in synchronization. That is, the power collection box apparatuses 91 ... 9N are configured as follows.

That is, to detect a direct current of each module constituting an array, direct current detectors 911, 912, ... 91M ... 9N1, 9N2, ... 9NM are provided to direct current bus lines 711, 712, ... 71M ... 7N1, 7N2, ... 7NM connecting the respective modules to the power collection boxes 81 ... 8N, the direct current detectors 911, 912, ... 91M ... 9N1, 9N2, ... 9NM and the power collection boxes 81 ... 8N are provided in the respective power conditioners 21 ... 2N, switches 811, 812 ... 81M and 8N1, 8N2 ... 8NM are connected to the direct current detectors 911, 912, ... 91M ... 9N1, 9N2, ... 9NM in series in the power collection boxes 81 ... 8N, and a curve trace apparatus 11 of a supervisory remote control apparatus 1 is configured to enable selecting operations of the switches 811, 812 ... 81M and 8N1, 8N2 ... 8NM through communication apparatuses 212 ... 2N2, 12.

Further, switches 216 ... 2N6 and 218 ... 2N8 are provided on input sides and output sides of the power conversion apparatuses 211 ... 2N1, and the switches 216 ... 2N6 and 218 ... 2N8 are controlled to be opened or closed by the curve trace apparatus 11 through the communication apparatuses 212 ... 2N2 and 12, thereby performing the initial charge of the smoothing capacitors 217 ... 2N7 in synchronization.

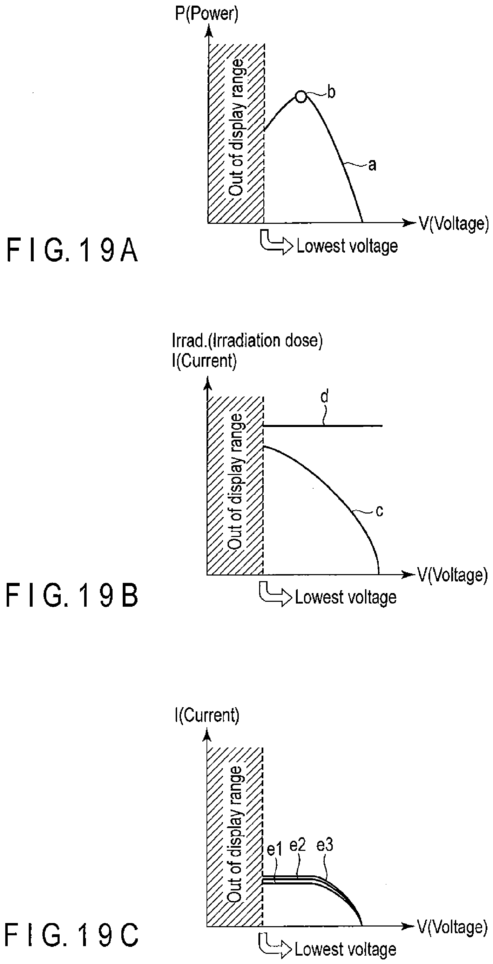

A description will now be given as to a display method of a non-illustrated display apparatus included in the curve trace apparatus 11 provided in the supervisory remote control apparatus 1 or a non-illustrated display apparatus included in the curve trace apparatus 11 and non-illustrated display apparatuses provided in the power conditioners 21 ... 2N with reference to FIG. 19A to FIG. 24. Each of FIG. 19A to FIG. 21 shows a display example when the number of the photovoltaic array is one. FIG. 19A shows a P-V curve a and a maximum power point b obtained by the MPPT control when an ordinate represents direct-current power P and an abscissa represents a direct-current V. FIG. 19B shows an I-V curve c and an amount of solar radiation d when an ordinate represents an amount of solar radiation and a direct current I and an abscissa represents a direct-current voltage V. FIG. 19C shows currents e1, e2, and e3 for each of the photovoltaic modules according to, e.g., the embodiment shown in FIG. 5 when an ordinate represents a direct current I and an abscissa represents a direct-current voltage V.

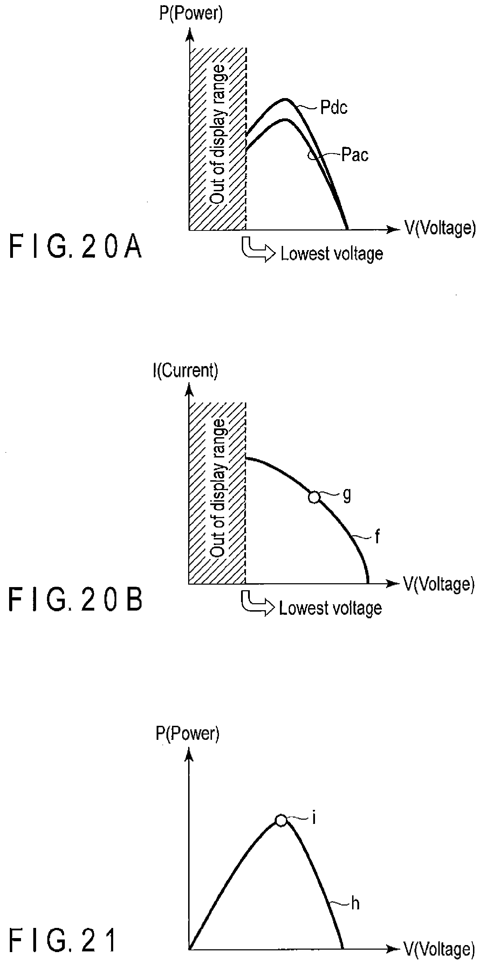

FIG. 20A is a view showing direct-current power Pdc and alternating-current power Vac in, e.g., the embodiment shown in FIG. 5 when an ordinate represents direct-current power P and an abscissa represents a direct-current voltage V.

FIG. 20B shows a P-V curve f and a maximum power point g when an ordinate represents a direct current I and an abscissa represents a direct-current voltage V.

FIG. 21 shows a display example showing a P-V curve h and a maximum power point i in a full direct-current voltage region obtained by the switches 811, 812, ... 81M in, e.g., the embodiment depicted in FIG. 8 when an ordinate represents direct-current power P and an abscissa represents a direct-current voltage V.

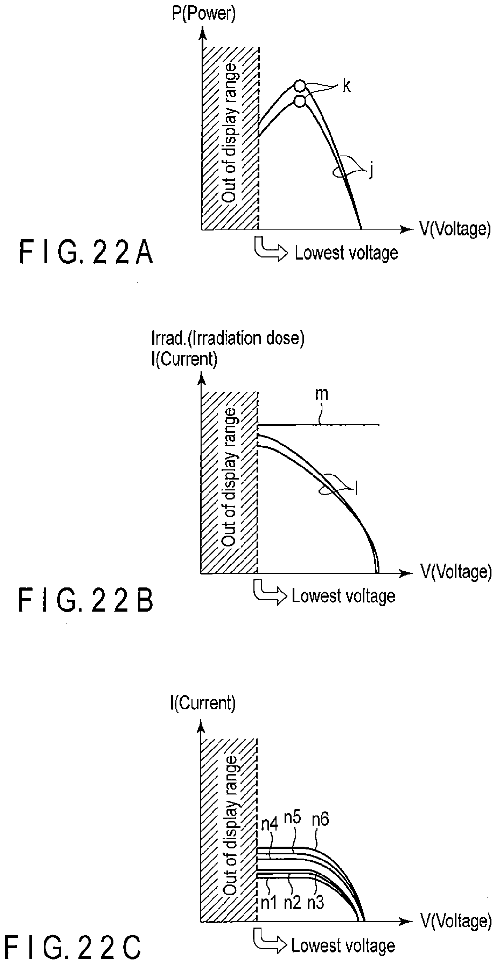

Each of FIG. 22A to FIG. 24 shows a display example when the number of the photovoltaic arrays is more than one. FIG. 22A shows a P-V curve j and a maximum power point k obtained by the MPPT control when an ordinate represents direct-current power P and an abscissa represents a direct-current voltage V. FIG. 22B shows an I-V curve 1 and an amount of solar radiation m when an ordinate represents an amount of solar radiation and a direct current I and an abscissa represents a direct-current voltage V. FIG. 22C shows currents n1, n2, n3, n4, n5, and n6 for the respective photovoltaic modules in, e.g., the embodiment depicted in FIG. 5 when an ordinate represents a direct current I and an abscissa represents a direct-current voltage V.

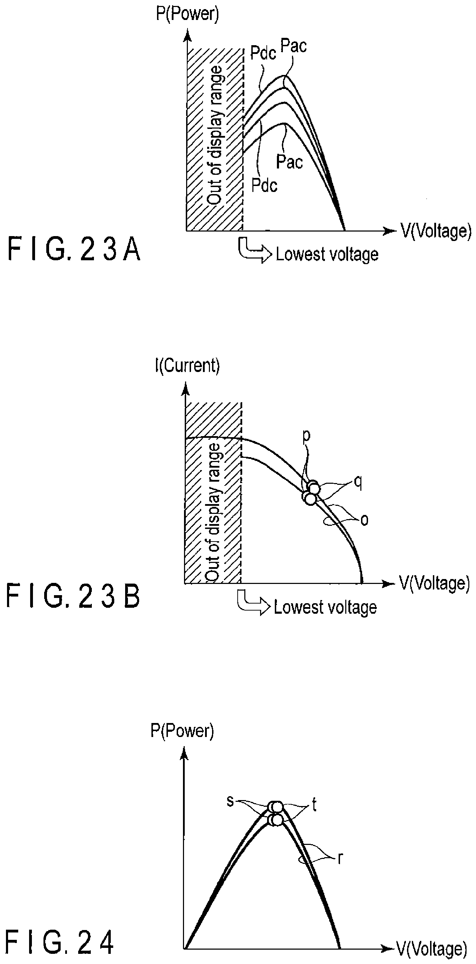

FIG. 23A is a view showing direct-current power Pdc and an alternating current Vac in, e.g., the embodiment depicted in FIG. 5 when an ordinate represents direct-current power P and an abscissa represents a direct-current voltage V.

FIG. 23B shows a P-V curve o and maximum power points p and q when an ordinate represents a direct current I and an abscissa represents a direct-current voltage V.

FIG. 24 shows a display example of a P-V curve r and maximum power point s and t in a full direct-current voltage region obtained by the switches 811, 812, ... 81M in, e.g., the embodiment depicted in FIG. 8 when an ordinate represents direct-current power P and an abscissa represents a direct-current voltage V.

## Claims

1. A power generation system including a plurality of photovoltaic power generation systems (101) and a supervisory remote control apparatus (1) which supervises and controls a state of the photovoltaic power generation systems (101 ... 10N), wherein each of the photovoltaic power generation systems comprises
a photovoltaic array (41...4N); a power conditioner (21...2N) which converts direct-current power generated by the photovoltaic array into desired direct-current power, further converts it into alternating-current power, and supplies it to the alternating-current power system, or converts direct-current power generated by the photovoltaic array into alternating-current power and supplies it to the alternating-current power system; and a measurement apparatus (31...3N) which measures power generating conditions of the photovoltaic array;
a control switching apparatus (213... 2N3) that switches MPPT control, by which the power conditioner (21...2N) receives a direct-current voltage command or a direct current command and a control switching command from the supervisory remote control apparatus (1) through a communication system and an output from the power conversion apparatus (211...21N) included in the power conditioner (21...2N) becomes maximum, to voltage control or current control using the direct-current voltage command (Vref) or the direct current command (Iref);
a power generating condition detector (311... 3N1, 312...3N2) as solar radiation intensity detector including actinometers (311 ... 3N1) that measure solar radiation intensity as power generating conditions of the respective photovoltaic arrays (41 ... 4N) ;
a direct-current voltage detector (214... 2N4) which detects a direct-current voltage that is an output from the photovoltaic array;
a direct current detector (215...2N5) which detects a direct current that is an output from the photovoltaic array,
the power generation system further comprising:
the communication system which has communication apparatuses (12, 212... 2N2, 313... 3N3) installed in the supervisory remote control apparatus (1), the power conditioner (21... 2N), and the measurement apparatus (31... 3N), respectively, and comprises a signal transmission path (911...9N1, 912...9N2, 913...9N3) which enables communication between the communication apparatus (12) in the supervisory remote control apparatus (1) and the communication apparatus (313...3N3) in the measurement apparatus (31...3N) and between the communication apparatus (12) in the supervisory remote control apparatus (1) and the communication apparatus (212...2N2) in the power conditioner (21...2N),
wherein the supervisory remote control apparatus (1) comprises
a curve trace apparatus (11) which is installed in the supervisory remote control apparatus (1), fetches a direct current detection value (I) detected by the direct current detector (215... 2N5) and a direct-current voltage detection value (V) detected by the direct-current voltage detector (214... 2N4), traces an I-V characteristic diagram of the photovoltaic array, and also traces power generating conditions detected by the power generating condition detector (311... 3N1, 312... 3N2) on the I-V characteristic diagram, and **characterized in that** the I-V characteristic diagram and the power generating condition detection value being traced in synchronization with transmission of the direct-current voltage command or the direct current command and the control switching command from the supervisory remote control apparatus (1) to the control switching apparatus (213...2N3), and the I-V characteristic diagram and the power generating condition detection value being displayed.

2. The power generation system according to claim 1, **characterized in that**
the photovoltaic array (41...4N) is divided into photovoltaic modules (411...4N1, 412...4N2,..., 41M...4NM), and a direct current smoothing capacitor (217...2N7) is provided on an input side of a power conversion apparatus included in the power conditioner (21...2N), and
a switch (811...8N1, 812...8N2, ..., 81M...8NM) is provided to a cable run connected with each photovoltaic module (411...4N1, 412...4N2,..., 41M...4NM) to enable selection of one of the photovoltaic modules (411...4N1, 412...4N2,..., 41M...4NM), and a cable run switch (216... 2N6) which enables performing initial charging of the smoothing capacitor (217...2N7) simultaneously with a trace operation of the curve trace apparatus (11) is provided on an input side of the direct current smoothing capacitor (217... 2N7).

3. A power generation system (101), comprising:
a plurality of photovoltaic arrays (41...4N); a plurality of power conditioners (21... 2N) which converts direct-current power generated by each of the photovoltaic arrays into desired direct-current power, further converts it into alternating-current power, and supplies it to an alternating-current power system, or converts direct-current power generated by each of the photovoltaic arrays into alternating-current power and supplies it to the alternating-current power system; a supervisory remote control apparatus (1) which supervises and controls a state of the photovoltaic power generation systems (101 ... 10N); and a measurement apparatus (31...3N) which measures power generating conditions of each of the photovoltaic arrays,
the power generation system (101) further comprising:
a communication system which has communication respectively, and comprises a signal transmission path (911... 91N, 912... 9N2, 913... 9N3) which enables communication between the communication apparatus (12) in the supervisory remote control apparatus (1) and the communication apparatus (313...3N3) in the measurement apparatus (31...3N) and between the communication apparatus (12) in the supervisory remote control apparatus (1) and the communication apparatus (212... 2N2) in each power conditioner (21...2N) ;
a control switching apparatus (213...2N3) that switches MPPT control, by which each power conditioner (21... 2N) receives a direct-current voltage command or a direct current command and a control switching command from the supervisory remote control apparatus (1) through the communication system and an output from the power conversion apparatus (211...2N1) included in each power conditioner (21..2N) becomes maximum, to voltage control or current control using the direct-current voltage command (Vref) or the direct current command (Iref);
at least one power generating condition detector (311... 3N1, 312...3N2) as solar radiation intensity detector including actinometers (311 ... 3N1) that measure solar radiation intensity as power generating conditions of the respective photovoltaic arrays (41 ... 4N);
a direct-current voltage detector (214... 2N4) which detects a direct-current voltage that is an output from each photovoltaic array;
a direct current detector (215...2N5) which detects a direct current that is an output from each photovoltaic array; and
a curve trace apparatus (11) which is installed in the supervisory remote control apparatus (1), fetches a direct current detection value (I) detected by each direct current detector (215... 2N5) and a direct-current voltage detection value (V) detected by the direct-current voltage detector (214... 2N4), traces an I-V characteristic diagram of each photovoltaic array, and also traces power generating conditions detected by the power generating condition detector (311...3N1, 312...3N2) on the I-V characteristic diagram of each photovoltaic array, and **characterized in that** the I-V characteristic diagram of each photovoltaic array and the power generating condition detection value being traced in synchronization with transmission of the direct-current voltage command or the direct current command and the control switching command from the supervisory remote control apparatus (1) to the control switching apparatus (213...2N3), and the I-V characteristic diagram of each photovoltaic array and the power generating condition detection value being displayed.

4. The power generation system according to claim 1, **characterized by** further comprising a direct current smoothing capacitor (217...2N7) on an input side of a power conversion apparatus (211...2N1) included in the power conditioner (21...2N),
wherein a cable run switch (216... 2N6) which enables performing initial charging of the smoothing capacitor (217... 2N7) simultaneously with a trace operation of the curve trace apparatus (11) is provided on the input side of the direct-current smoothing capacitor (217...2N7).

5. The power generation system according to claim 1, **characterized in that**
the photovoltaic array is divided into photovoltaic modules (411...4N1, 412...4N2,..., 41M...4NM) or the photovoltaic arrays (41...4N) are provided, and a direct current smoothing capacitor (217... 2N7) is provided on an input side of a power conversion apparatus (211... 2N1) included in the power conditioner (21... 2N), and
a switch (811...8N1, 812...8N2, ..., 81M...8NM) is provided to a cable run connected with each photovoltaic module (411...4N1, 412...4N2,..., 41M...4NM) or each photovoltaic array (41...4N) to enable selecting one of each photovoltaic module (411...4N1, 412...4N2,..., 41M...4NM) and each photovoltaic array (41...4N), and a cable run switch (216... 2N6) that enables performing initial charging of the smoothing capacitor (217...2N7) simultaneously with a trace operation of the curve trace apparatus (11) is provided on the input side of the direct current smoothing capacitor (217... 2N7).

6. The power generation system according to one of claims 1 and 3, wherein
the power generating condition detector further includes one of an anemometer (3151...315N) which measures a velocity of wind, and an air temperature gauge (312...3N2) which measures an air temperature at an installation position of the photovoltaic array or the photovoltaic module, or a temperature gauge which measures a temperature of the photovoltaic array or the photovoltaic module, or a camera (3161...316N) configured to visually confirm a solar radiation environment at the installation position of the photovoltaic array or the photovoltaic module.

7. The power generation system according to one of claims 1 and 3, **characterized in that**
a display apparatus that enables visually confirming the characteristic diagram traced by the curve trace apparatus (11) is installed in accordance with the supervisory remote control apparatus (1) or the supervisory remote control apparatus (1) and each power conditioner (21...2N).

8. The power generation system according to one of claims 1 and 3, wherein
the display apparatus displays with time detection values of the power generating condition detector (311... 3N1, 312... 3N2), the direct-current voltage detector (214... 2N4), the direct current detector (215... 2N5), the alternating-current power detector (218... 2N8), and a direct-current power arithmetic unit which calculates direct-current power from values detected by the direct-current voltage detector (214...2N4) and the direct current detector (215... 2N5).

9. The power generation system according to one of claims 1 and 3, wherein
the display apparatus displays the P-V characteristics from a detection value (P) of the direct current arithmetic unit and a detection value (V) of the direct-current voltage detector (214...2N4), a maximum power point, and a detection value of the power generating condition detector simultaneously with characteristics of the photovoltaic array or photovoltaic arrays.

10. The power generation system according to one of claims 1 and 3, wherein
the display apparatus simultaneously displays the I-V characteristics from a detection value (I) of the direct current detector (215...2N5) and a detection value (V) of the direct-current voltage detector (214...2N4) and a detection value of the power generating condition detector.

11. The power generation system according to one of claims 1 and 3, wherein
the display apparatus displays a detection value (I) of the direct current detector (215... 2N5) simultaneously with characteristics of the photovoltaic array or each of the photovoltaic arrays.

12. The power generation system according to claim 8, wherein
the display apparatus displays with time detection values of the alternating-current power detector (218...2N8) and a direct-current power arithmetic unit which calculates direct-current power from values detected from the direct-current voltage detector (214... 2N4) and the direct current detector (215... 2N5).

13. The power generation system according to claim 4 or 5, wherein the display apparatus simultaneously displays P-V characteristics in a full direct-current voltage region obtained by a switch (811, 812,...81M) provided on a direct-current output side and a maximum power point.

## Patentansprüche

1. Leistungserzeugungssystem, beinhaltend eine Vielzahl von Fotovoltaik-Leistungserzeugungssystemen (101) und eine Überwachungsfernsteuerungseinrichtung (1), welche einen Zustand der Fotovoltaik-Leistungserzeugungssysteme (101...10N) überwacht und steuert, wobei jedes der Fotovoltaik-Leistungserzeugungssysteme Folgendes umfasst:
eine Fotovoltaikanordnung (41...4N); einen Leistungskonditionierer (21...2N), welcher Gleichstromleistung, die durch die Fotovoltaikanordnung erzeugt wird, in gewünschte Gleichstromleistung umwandelt, sie ferner in Wechselstromleistung umwandelt und sie dem Wechselstromleistungssystem zuführt oder Gleichstromleistung, die durch die Fotovoltaikanordnung erzeugt wird, in Wechselstromleistung umwandelt und sie dem Wechselstromleistungssystem zuführt; und eine Messeinrichtung (31...3N), welche Leistungserzeugungsbedingungen der Fotovoltaikanordnung misst;
eine Steuerungswechseleinrichtung (213...2N3), welche das MPPT-Protokoll, durch welches der Leistungskonditionierer (21...2N) einen Gleichspannungsbefehl oder einen Gleichstrombefehl und einen Steuerungswechselbefehl von der Überwachungsfernsteuerungseinrichtung (1) durch ein Kommunikationssystem empfängt und eine Ausgabe von der Leistungsumwandlungseinrichtung (211...21N), die in dem Leistungskonditionierer (21...2N) enthalten ist, maximal wird, zu Spannungssteuerung oder Stromsteuerung unter Verwendung des Gleichspannungsbefehls (Vref) oder des Gleichstrombefehls (Iref) wechselt;
einen Leistungserzeugungsbedingungsdetektor (311...3N1, 312...3N2) als einen Sonnenstrahlungsintensitätsdetektor, beinhaltend Aktinometer (311...3N1), welche die Sonnenstrahlungsintensität als Leistungserzeugungsbedingungen der entsprechenden Fotovoltaikanordnungen (41...4N) messen;
einen Gleichspanungsdetektor (214...2N4), welcher eine Gleichspannung detektiert, die eine Ausgabe von der Fotovoltaikanordnung ist;
einen Gleichstromdetektor (215...2N5), welcher einen Gleichstrom detektiert, der eine Ausgabe von der Fotovoltaikanordnung ist,
wobei das Leistungserzeugungssystem ferner Folgendes umfasst:
das Kommunikationssystem, welches Kommunikationseinrichtungen (12, 212...2N2, 313...3N3) aufweist, die in der Überwachungsfernsteuerungseinrichtung (1), dem Leistungskonditionierer (21...2N) bzw. der Messeinrichtung (31...3N) installiert sind, und einen Signalübertragungsweg (911...9N1, 912...9N2, 913...9N3) umfasst, der Kommunikation zwischen der Kommunikationseinrichtung (12) in der Überwachungsfernsteuerungseinrichtung (1) und der Kommunikationseinrichtung (313...3N3) in der Messeinrichtung (31...3N) und zwischen der Kommunikationseinrichtung (12) in der Überwachungsfernsteuerungseinrichtung (1) und der Kommunikationseinrichtung (212...2N2) in dem Leistungskonditionierer (21...2N) ermöglicht,
wobei die Überwachungsfernsteuerungseinrichtung (1) eine Kurvenverfolgungseinrichtung (11) umfasst, die in der Überwachungsfernsteuerungseinrichtung (1) installiert ist und einen Gleichstromdetektionswert (I), der durch den Gleichstromdetektor (215...2N5) detektiert wird, und einen Gleichspannungsdetektionswert (V), der durch den Gleichspannungsdetektor (214...2N4) detektiert wird, abruft, ein I-V-Kennfeld der Fotovoltaikanordnung verfolgt und zudem Leistungserzeugungsbedingungen verfolgt, die durch den Leistungserzeugungsbedingungsdetektor (311...3N1, 312...3N2) in dem I-V-Kennfeld detektiert werden,
und **dadurch gekennzeichnet, dass**
das I-V-Kennfeld und der Leistungserzeugungsbedingungsdetektionswert in Synchronisation mit der Übertragung des Gleichspannungsbefehls oder des Gleichstrombefehls und des Steuerungswechselbefehls von der Überwachungsfernsteuerungseinrichtung (1) an die Steuerungswechseleinrichtung (213...2N3) verfolgt wird und das I-V-Kennfeld und der Leistungserzeugungsbedingungsdetektionswert angezeigt werden.

2. Leistungserzeugungssystem nach Anspruch 1, **dadurch gekennzeichnet, dass**
die Fotovoltaikanordnung (41...4N) in Fotovoltaikmodule (411...4N1, 412...4N2, ..., 41M...4NM) unterteilt ist und ein Gleichstromglättungskondensator (217...2N7) auf einer Eingabeseite einer Leistungsumwandlungseinrichtung bereitgestellt ist, die in dem Leistungskonditionierer (21...2N) enthalten ist, und
ein Schalter (811...8N1, 812...8N2, ..., 81M...8NM) einer Kabeltrasse bereitgestellt ist, die mit jedem Fotovoltaikmodul (411...4N1, 412...4N2, ..., 41M...4NM) verbunden ist, um eine Auswahl eines der Fotovoltaikmodule (411...4N1, 412...4N2, ..., 41M...4NM) zu ermöglichen, und ein Kabeltrassenschalter (216...2N6), welcher Durchführen einer anfänglichen Ladung des Glättungskondensators (217...2N7) gleichzeitig mit einem Verfolgungsvorgang der Kurvenverfolgungseinrichtung (11) ermöglicht, auf einer Eingabeseite des Gleichstromglättungskondensators (217...2N7) bereitgestellt ist.

3. Leistungserzeugungssystem (101), umfassend:
eine Vielzahl von Fotovoltaikanordnungen (41...4N); eine Vielzahl von Leistungskonditionierern (21...2N), welche Gleichstromleistung, die durch jede der Fotovoltaikanordnungen erzeugt wird, in gewünschte Gleichstromleistung umwandelt, sie ferner in Wechselstromleistung umwandelt und sie einem Wechselstromleistungssystem zuführt oder Gleichstromleistung, die durch jede der Fotovoltaikanordnungen erzeugt wird, in Wechselstromleistung umwandelt und sie dem Wechselstromleistungssystem zuführt; eine Überwachungsfernsteuerungseinrichtung (1), welche einen Zustand der Fotovoltaik-Leistungserzeugungssysteme (101...10N) überwacht und steuert; und eine Messeinrichtung (31...3N), welche Leistungserzeugungsbedingungen von jeder der Fotovoltaikanordnungen misst;
wobei das Leistungserzeugungssystem (101) ferner Folgendes umfasst:
ein Kommunikationssystem, welches entsprechende Kommunikation aufweist und einen Signalübertragungsweg (911...9N1, 912...9N2, 913...9N3) umfasst, der Kommunikation zwischen der Kommunikationseinrichtung (12) in der Überwachungsfernsteuerungseinrichtung (1) und der Kommunikationseinrichtung (313...3N3) in der Messeinrichtung (31...3N) und zwischen der Kommunikationseinrichtung (12) in der Überwachungsfernsteuerungseinrichtung (1) und der Kommunikationseinrichtung (212...2N2) in jedem Leistungskonditionierer (21...2N) ermöglicht;
eine Steuerungswechseleinrichtung (213...2N3), welche das MPPT-Protokoll, durch welches jeder Leistungskonditionierer (21...2N) einen Gleichspannungsbefehl oder einen Gleichstrombefehl und einen Steuerungswechselbefehl von der Überwachungsfernsteuerungseinrichtung (1) durch das Kommunikationssystem empfängt und eine Ausgabe von der Leistungsumwandlungseinrichtung (211...2N1), die in jedem Leistungskonditionierer (21...2N) enthalten ist, maximal wird, zu Spannungssteuerung oder Stromsteuerung unter Verwendung des Gleichspannungsbefehls (Vref) oder des Gleichstrombefehls (Iref) wechselt;
mindestens einen Leistungserzeugungsbedingungsdetektor (311...3N1, 312...3N2) als Sonnenstrahlungsintensitätsdetektor, beinhaltend Aktinometer (311...3N1), welche die Sonnenstrahlungsintensität als Leistungserzeugungsbedingungen der entsprechenden Fotovoltaikanordnungen (41...4N) messen;
einen Gleichspanungsdetektor (214...2N4), welcher eine Gleichspannung detektiert, die eine Ausgabe von jeder Fotovoltaikanordnung ist;
einen Gleichstromdetektor (215...2N5), welcher einen Gleichstrom detektiert, der eine Ausgabe von jeder Fotovoltaikanordnung ist; und
eine Kurvenverfolgungseinrichtung (11), die in der Überwachungsfernsteuerungseinrichtung (1) installiert ist, einen Gleichstromdetektionswert (I), der durch jeden Gleichstromdetektor (215...2N5) detektiert wird, und einen Gleichspannungsdetektionswert (V), der durch den Gleichspannungsdetektor (214...2N4) detektiert wird, abruft, ein I-V-Kennfeld jeder Fotovoltaikanordnung verfolgt und zudem Leistungserzeugungsbedingungen verfolgt, die durch den Leistungserzeugungsbedingungsdetektor (311...3N1, 312...3N2) in dem I-V-Kennfeld jeder Fotovoltaikanordnung detektiert werden,
und **dadurch gekennzeichnet, dass**
das I-V-Kennfeld jeder Fotovoltaikanordnung und der Leistungserzeugungsbedingungsdetektionswert in Synchronisation mit der Übertragung des Gleichspannungsbefehls oder des Gleichstrombefehls und des Steuerungswechselbefehls von der Überwachungsfernsteuerungseinrichtung (1) an die Steuerungswechseleinrichtung (213...2N3) verfolgt wird und das I-V-Kennfeld jeder Fotovoltaikanordnung und der Leistungserzeugungsbedingungsdetektionswert angezeigt werden.

4. Leistungserzeugungssystem nach Anspruch 1, **dadurch gekennzeichnet, dass** es ferner einen Gleichstromglättungskondensator (217...2N7) auf einer Eingabeseite einer Leistungsumwandlungseinrichtung (211...2N1) umfasst, die in dem Leistungskonditionierer (21...2N) enthalten ist,
wobei ein Kabeltrassenschalter (216...2N6), welcher Durchführen einer anfänglichen Ladung des Glättungskondensators (217...2N7) gleichzeitig mit einem Verfolgungsvorgang der Kurvenverfolgungseinrichtung (11) ermöglicht, auf einer Eingabeseite des Gleichstromglättungskondensators (217...2N7) bereitgestellt ist.

5. Leistungserzeugungssystem nach Anspruch 1, **dadurch gekennzeichnet, dass**
die Fotovoltaikanordnung in Fotovoltaikmodule (411...4N1, 412...4N2, ..., 41M...4NM) unterteilt ist oder die Fotovoltaikanordnungen (41...4N) bereitgestellt sind und ein Gleichstromglättungskondensator (217...2N7) auf einer Eingabeseite einer Leistungsumwandlungseinrichtung (211...2N1) bereitgestellt ist, die in dem Leistungskonditionierer (21...2N) enthalten ist, und
ein Schalter (811...8N1, 812...8N2, ..., 81M...8NM) einer Kabeltrasse bereitgestellt ist, die mit jedem Fotovoltaikmodul (411...4N1, 412...4N2, ..., 41M...4NM) oder jeder Fotovoltaikanordnung (41...4N) verbunden ist, um Auswählen von einem von jedem Fotovoltaikmodul (411...4N1, 412...4N2, ..., 41M...4NM) und jeder Fotovoltaikanordnung (41...4N) zu ermöglichen, und ein Kabeltrassenschalter (216...2N6), welcher Durchführen einer anfänglichen Ladung des Glättungskondensators (217...2N7) gleichzeitig mit einem Verfolgungsvorgang der Kurvenverfolgungseinrichtung (11) ermöglicht, auf einer Eingabeseite des Gleichstromglättungskondensators (217...2N7) bereitgestellt ist.

6. Leistungserzeugungssystem nach einem der Ansprüche 1 und 3, wobei der Leistungserzeugungsbedingungsdetektor ferner eines von einem Anemometer (3151...315N), welches eine Windgeschwindigkeit misst, und einem Lufttemperaturmesser (312...3N2), der eine Lufttemperatur an einer Installationsposition der Fotovoltaikanordnung oder des Fotovoltaikmoduls misst, oder einem Temperaturmesser, der eine Temperatur der Fotovoltaikanordnung oder des Fotovoltaikmoduls misst, oder einer Kamera (3161...316N) beinhaltet, die dazu konfiguriert ist, eine Sonnenstrahlungsumgebung an der Installationsposition der Fotovoltaikanordnung oder des Fotovoltaikmoduls visuell zu bestätigen.

7. Leistungserzeugungssystem nach einem der Ansprüche 1 und 3, **dadurch gekennzeichnet, dass**
eine Anzeigeeinrichtung, welche visuelles Bestätigen des Kennfelds, das durch die Kurvenverfolgungseinrichtung (11) verfolgt wird, ermöglicht, gemäß der Überwachungsfernsteuerungseinrichtung (1) oder der Überwachungsfernsteuerungseinrichtung (1) und jedem Leistungskonditionierer (21...2N) installiert ist.

8. Leistungserzeugungssystem nach einem der Ansprüche 1 und 3, wobei
die Anzeigeeinrichtung mit der Zeit Detektionswerte des Leistungserzeugungsbedingungsdetektors (311...3N1, 312...3N2), des Gleichspannungsdetektors (214...2N4), des Gleichstromdetektors (215...2N5), des Wechselstromleistungsdetektors (218...2N8) und einer Gleichstromleistungsrecheneinheit anzeigt, die Gleichstromleistung aus Werten berechnet, die durch den Gleichspannungsdetektor (214...2N4) und den Gleichstromdetektor (215...2N5) detektiert werden.

9. Leistungserzeugungssystem nach einem der Ansprüche 1 und 3, wobei
die Anzeigeeinrichtung die P-V-Eigenschaften von einem Detektionswert (P) der Gleichstromrecheneinheit und einem Detektionswert (V) des Gleichspannungsdetektors (214...2N4), einen Maximalleistungspunkt und einen Detektionswert des Leistungserzeugungsbedingungsdetektors gleichzeitig mit Eigenschaften der Fotovoltaikanordnung oder der Fotovoltaikanordnungen anzeigt.

10. Leistungserzeugungssystem nach einem der Ansprüche 1 und 3, wobei
die Anzeigevorrichtung gleichzeitig die I-V-Eigenschaften eines Detektionswertes (I) des Gleichstromdetektors (215...2N5) und einem Detektionswert (V) des Gleichspannungsdetektors (214...2N4) und einen Detektionswert des Leistungserzeugungsbedingungsdetektors anzeigt.

11. Leistungserzeugungssystem nach einem der Ansprüche 1 und 3, wobei
die Anzeigevorrichtung einen Detektionswert (I) des Gleichstromdetektors (215...2N5) gleichzeitig mit Eigenschaften der Fotovoltaikanordnung oder der Fotovoltaikanordnungen anzeigt.

12. Leistungserzeugungssystem nach Anspruch 8, wobei
die Anzeigevorrichtung mit der Zeit Detektionswerte des Wechselstromleistungsdetektors (218...2N8) und einer Gleichstromleistungsrecheneinheit anzeigt, die Gleichstromleistung aus Werten berechnet, die von dem Gleichspannungsdetektor (214...2N4) und dem Gleichstromdetektor (215...2N5) detektiert werden.

13. Leistungserzeugungssystem nach Anspruch 4 oder 5, wobei die Anzeigevorrichtung gleichzeitig P-V-Eigenschaften in einer vollen Gleichspannungsregion, die durch einen Schalter (811, 812, ...81M) erhalten wird, der auf einer Gleichstromausgabeseite bereitgestellt ist, und einen Maximalleistungspunkt anzeigt.

## Revendications

1. Système de génération de puissance comportant une pluralité de systèmes de génération de puissance photovoltaïques (101) et un appareil de commande à distance de supervision (1) qui supervise et commande un état des systèmes de génération de puissance photovoltaïques (101 ... 10N), dans lequel chacun des systèmes de génération de puissance photovoltaïques comprend
un réseau photovoltaïque (41 ... 4N) ; un conditionneur de puissance (21 ... 2N) qui convertit une puissance en courant continu générée par le réseau photovoltaïque en une puissance en courant continu souhaitée, la convertit en outre en une puissance en courant alternatif, et la fournit au système de puissance en courant alternatif, ou convertit une puissance en courant continu générée par le réseau photovoltaïque en une puissance en courant alternatif et la fournit au système de puissance en courant alternatif ; et un appareil de mesure (31 ... 3N) qui mesure des conditions de génération de puissance du réseau photovoltaïque ;
un appareil de commutation de commande (213 ... 2N3) qui commute une commande MPPT, par lequel le conditionneur de puissance (21 ... 2N) reçoit un ordre de tension continue ou un ordre de courant continu et un ordre de commutation de commande depuis l'appareil de commande à distance de supervision (1) par le biais d'un système de communication et une sortie depuis l'appareil de conversion de puissance (211 ... 21N) inclus dans le conditionneur de puissance (21 ... 2N) devient maximale, en commande de tension ou en commande de courant à l'aide de l'ordre de tension continue (Vref) ou de l'ordre de courant continu (Iref) ;
un détecteur de conditions de génération de puissance (311 ... 3N1, 312 ... 3N2) sous la forme d'un détecteur d'intensité de rayonnement solaire comportant des actinomètres (311 ... 3N1) qui mesurent une intensité de rayonnement solaire en tant que conditions de génération de puissance des réseaux photovoltaïques (41 ... 4N) respectifs ;
un détecteur de tension continue (214 ... 2N4) qui détecte une tension continue qui est une sortie depuis le réseau photovoltaïque ;
un détecteur de courant continu (215 ... 2N5) qui détecte un courant continu qui est une sortie depuis le réseau photovoltaïque,
le système de génération de puissance comprenant en outre :
le système de communication qui a des appareils de communication (12, 212 ... 2N2, 313 ... 3N3) installés dans l'appareil de commande à distance de supervision (1), le conditionneur de puissance (21 ... 2N), et l'appareil de mesure (31 ... 3N) , respectivement, et comprend une voie de transmission de signal (911 ... 9N1, 912 ... 9N2, 913 ... 9N3) qui permet une communication entre l'appareil de communication (12) dans l'appareil de commande à distance de supervision (1) et l'appareil de communication (313 ... 3N3) dans l'appareil de mesure (31 ... 3N) et entre l'appareil de communication (12) et l'appareil de commande à distance de supervision (1) et l'appareil de communication (212 ... 2N2) dans le conditionneur de puissance (21 ... 2N) ,
dans lequel l'appareil de commande à distance de supervision (1) comprend
un appareil de traçage de courbe (11) qui est installé dans l'appareil de commande à distance de supervision (1), récupère une valeur de détection de courant continu (I) détectée par le détecteur de courant continu (215 ... 2N5) et une valeur de détection de tension continue (V) détectée par le détecteur de tension continue (214 ... 2N4), trace un diagramme de caractéristiques I-V du réseau photovoltaïque, et trace également des conditions de génération de puissance détectées par le détecteur de conditions de génération de puissance (311 ... 3N1, 312 ... 3N2) sur le diagramme de caractéristiques I-V, et **caractérisé en ce que** le diagramme de caractéristiques I-V et la valeur de détection de condition de génération de puissance sont tracés en synchronisation avec une transmission de l'ordre de tension continue ou de l'ordre de courant continu et de l'ordre de commutation de commande de l'appareil de commande à distance de supervision (1) à l'appareil de commutation de commande (213 ... 2N3), et le diagramme de caractéristiques I-V et la valeur de détection de condition de génération de puissance sont affichés.

2. Système de génération de puissance selon la revendication 1, **caractérisé en ce que**
le réseau photovoltaïque (41 ... 4N) est divisé en modules photovoltaïques (411 ... 4N1, 412 ... 4N2, ..., 41M ... 4NM), et un condensateur de filtrage de courant continu (217 ... 2N7) est prévu sur un côté entrée d'un appareil de conversion de puissance inclus dans le conditionneur de puissance (21 ... 2N), et
un commutateur (811 ... 8N1, 812 ... 8N2, ..., 81M ... 8NM) est prévu sur un parcours de câble connecté à chaque module photovoltaïque (411 ... 4N1, 412 ... 4N2, ..., 41M ... 4NM) pour permettre la sélection de l'un des modules photovoltaïques (411 ... 4N1, 412 ... 4N2, ..., 41M ... 4NM), et un commutateur de parcours de câble (216 ... 2N6) qui permet la réalisation d'une charge initiale du condensateur de filtrage (217 ... 2N7) simultanément à une opération de traçage de l'appareil de traçage de courbe (11) est prévu sur un côté entrée du condensateur de filtrage de courant continu (217 ... 2N7).

3. Système de génération de puissance (101) comprenant :
une pluralité de réseaux photovoltaïques (41 ... 4N) ; une pluralité de conditionneurs de puissance (21 ... 2N) qui convertit une puissance en courant continu générée par chacun des réseaux photovoltaïques en une puissance en courant continu souhaitée, la convertit en outre en une puissance en courant alternatif, et la fournit à un système de puissance en courant alternatif, ou convertit une puissance en courant continu générée par chacun des réseaux photovoltaïques en une puissance en courant alternatif et la fournit au système de puissance en courant alternatif ; un appareil de commande à distance de supervision (1) qui supervise et commande un état des systèmes de génération de puissance photovoltaïques (101 ... 10N) ; et un appareil de mesure (31 ... 3N) qui mesure des conditions de génération de puissance de chacun des réseaux photovoltaïques,
le système de génération de puissance (101) comprenant en outre :
un système de communication qui a une communication respectivement, et comprend une voie de transmission de signal (911 ... 9N1, 912 ... 9N2, 913 ... 9N3) qui permet une communication entre l'appareil de communication (12) dans l'appareil de commande à distance de supervision (1) et l'appareil de communication (313 ... 3N3) dans l'appareil de mesure (31 ... 3N) et entre l'appareil de communication (12) et l'appareil de commande à distance de supervision (1) et l'appareil de communication (212 ... 2N2) dans chaque conditionneur de puissance (21 ... 2N) ;
un appareil de commutation de commande (213 ... 2N3) qui commute une commande MPPT, par lequel chaque conditionneur de puissance (21 ... 2N) reçoit un ordre de tension continue ou un ordre de courant continu et un ordre de commutation de commande depuis l'appareil de commande à distance de supervision (1) par le biais du système de communication et une sortie depuis l'appareil de conversion de puissance (211 ... 21N) inclus dans chaque conditionneur de puissance (21 ... 2N) devient maximale, en commande de tension ou en commande de courant à l'aide de l'ordre de tension continue (Vref) ou de l'ordre de courant continu (Iref) ;
au moins un détecteur de conditions de génération de puissance (311 ... 3N1, 312 ... 3N2) sous la forme d'un détecteur d'intensité de rayonnement solaire comportant des actinomètres (311 ... 3N1) qui mesurent une intensité de rayonnement solaire en tant que conditions de génération de puissance des réseaux photovoltaïques (41 ... 4N) respectifs ;
un détecteur de tension continue (214 ... 2N4) qui détecte une tension continue qui est une sortie depuis chaque réseau photovoltaïque ;
un détecteur de courant continu (215 ... 2N5) qui détecte un courant continu qui est une sortie depuis chaque réseau photovoltaïque ; et
un appareil de traçage de courbe (11) qui est installé dans l'appareil de commande à distance de supervision (1), récupère une valeur de détection de courant continu (I) détectée par chaque détecteur de courant continu (215 ... 2N5) et une valeur de détection de tension continue (V) détectée par le détecteur de tension continue (214 ... 2N4), trace un diagramme de caractéristiques I-V de chaque réseau photovoltaïque, et trace également des conditions de génération de puissance détectées par le détecteur de conditions de génération de puissance (311 ... 3N1, 312 ... 3N2) sur le diagramme de caractéristiques I-V de chaque réseau photovoltaïque, et **caractérisé en ce que** le diagramme de caractéristiques I-V de chaque réseau photovoltaïque et la valeur de détection de condition de génération de puissance sont tracés en synchronisation avec une transmission de l'ordre de tension continue ou de l'ordre de courant continu et de l'ordre de commutation de commande de l'appareil de commande à distance de supervision (1) à l'appareil de commutation de commande (213 ... 2N3) , et le diagramme de caractéristiques I-V de chaque réseau photovoltaïque et la valeur de détection de condition de génération de puissance sont affichés.

4. Système de génération de puissance selon la revendication 1, **caractérisé en ce qu'**il comprend en outre un condensateur de filtrage de courant continu (217 ... 2N7) sur un côté entrée d'un appareil de conversion de puissance (211 ... 2N1) inclus dans le conditionneur de puissance (21 ... 2N),
dans lequel un commutateur de parcours de câble (216 ... 2N6) qui permet la réalisation d'une charge initiale du condensateur de filtrage (217 ... 2N7) simultanément à une opération de traçage de l'appareil de traçage de courbe (11) est prévu sur le côté entrée du condensateur de filtrage de courant continu (217 ... 2N7).

5. Système de génération de puissance selon la revendication 1, **caractérisé en ce que**
le réseau photovoltaïque est divisé en modules photovoltaïques (411 ... 4N1, 412 ... 4N2, ..., 41M ... 4NM) ou les réseaux photovoltaïques (41 ... 4N) sont prévus, et un condensateur de filtrage de courant continu (217 ... 2N7) est prévu sur un côté entrée d'un appareil de conversion de puissance inclus dans le conditionneur de puissance (21 ... 2N) , et
un commutateur (811 ... 8N1, 812 ... 8N2, ..., 81M ... 8NM) est prévu sur un parcours de câble connecté à chaque module photovoltaïque (411 ... 4N1, 412 ... 4N2, ..., 41M ... 4NM) ou chaque réseau photovoltaïque (41 ... 4N) pour permettre la sélection de l'un de chaque module photovoltaïque (411 ... 4N1, 412 ... 4N2, ..., 41M ... 4NM) et de chaque réseau photovoltaïque (41 ... 4N), et un commutateur de parcours de câble (216 ... 2N6) qui permet la réalisation d'une charge initiale du condensateur de filtrage (217 ... 2N7) simultanément à une opération de traçage de l'appareil de traçage de courbe (11) est prévu sur le côté entrée du condensateur de filtrage de courant continu (217 ... 2N7).

6. Système de génération de puissance selon l'une des revendications 1 et 3, dans lequel
le détecteur de conditions de génération de puissance comporte en outre l'un d'un anémomètre (3151 ... 315N) qui mesure une vitesse du vent, et d'un indicateur de température de l'air (312 ... 3N2) qui mesure une température de l'air à une position d'installation du réseau photovoltaïque ou du module photovoltaïque, ou d'un indicateur de température qui mesure une température du réseau photovoltaïque ou du module photovoltaïque, ou d'une caméra (3161 ... 316N) configurée pour confirmer visuellement un environnement de rayonnement solaire à la position d'installation du réseau photovoltaïque ou du module photovoltaïque.

7. Système de génération de puissance selon l'une des revendications 1 et 3, **caractérisé en ce que**
un appareil d'affichage qui permet la confirmation visuelle du diagramme de caractéristiques tracé par l'appareil de traçage de courbe (11) est installé en conformité avec l'appareil de commande à distance de supervision (1) ou l'appareil de commande à distance de supervision (1) et chaque conditionneur de puissance (21 ... 2N) .

8. Système de génération de puissance selon l'une des revendications 1 et 3, dans lequel
l'appareil d'affichage affiche des valeurs de détection de temps du détecteur de conditions de génération de puissance (311 ... 3N1, 312 ... 3N2), du détecteur de tension continue (214 ... 2N4), du détecteur de courant continu (215 ... 2N5), du détecteur de puissance en courant alternatif (218 ... 2N8), et d'une unité arithmétique de puissance en courant continu qui calcule une puissance en courant continu à partir de valeurs détectées par le détecteur de tension continue (214 ... 2N4) et le détecteur de courant continu (215 ... 2N5) .

9. Système de génération de puissance selon l'une des revendications 1 et 3, dans lequel
l'appareil d'affichage affiche les caractéristiques P-V à partir d'une valeur de détection (P) de l'unité arithmétique à courant continu et d'une valeur de détection (V) du détecteur de tension continue (214 ... 2N4), d'un point de puissance maximale, et d'une valeur de détection du détecteur de conditions de génération de puissance simultanément à des caractéristiques du réseau photovoltaïque ou des réseaux photovoltaïques.

10. Système de génération de puissance selon l'une des revendications 1 et 3, dans lequel
l'appareil d'affichage affiche simultanément les caractéristiques I-V à partir d'une valeur de détection (I) du détecteur de courant continu (215 ... 2N5) et d'une valeur de détection (V) du détecteur de tension continue (214 ... 2N4) et d'une valeur de détection du détecteur de conditions de génération de puissance.

11. Système de génération de puissance selon l'une des revendications 1 et 3, dans lequel
l'appareil d'affichage affiche une valeur de détection (I) du détecteur de courant continu (215 ... 2N5) simultanément à des caractéristiques du réseau photovoltaïque ou de chacun des réseaux photovoltaïques.

12. Système de génération de puissance selon la revendication 8, dans lequel
l'appareil d'affichage affiche des valeurs de détection de temps du détecteur de puissance en courant alternatif (218 ... 2N8) et d'une unité arithmétique de puissance en courant continu qui calcule une puissance en courant continu à partir de valeurs détectées depuis le détecteur de tension continue (214 ... 2N4) et du détecteur de courant continu (215 ... 2N5) .

13. Système de génération de puissance selon la revendication 4 ou 5, dans lequel l'appareil d'affichage affiche simultanément des caractéristiques P-V dans une région de tension continue totale obtenues par un commutateur (811, 812, ... 81M) prévu sur un côté sortie de courant continu et un point de puissance maximale.
